# EUROPÄISCHE PATENTSCHRIFT

(11) **EP 2 486 988 B1**
(45) Veröffentlichungstag und Bekanntmachung des Hinweises auf die Patenterteilung: **31.07.2013**
(21) Anmeldenummer: 11158126.0
(22) Anmeldetag: 14.03.2011
(51) Int. Cl.: B09B 1/00, B65G 5/00, E03B 3/00, E21F 17/16, F03B 13/06

(54) **Unterirdisches Wassermanagementsystem für Minen und Verfahren zum Betrieb dieses Wassermanagementsystems**
Subterranean water management system for mines and method of operating this water management system
Système de traitement de l'eau souterrain pour mines et procédé pour la mise en oeuvre de ce système de traitement d'eau

(30) Priorität: 11.02.2011 EP 11154117
(43) Veröffentlichungstag der Anmeldung: 15.08.2012
(73) Patentinhaber: Luxin (Green Planet) AG, 6004 Luzern (CH)
(72) Erfinder: Burkhardt, Holger, 79761, Waldshut-Tiengen (DE); Glanzmann, Arthur, 6004, Luzern (CH)
(74) Vertreter: Rupp, Christian

(56) Entgegenhaltungen:
- EP-A1- 2 058 441
- DE-A1- 10 028 431
- DE-A1- 10 361 590
- DE-A1-102008 007 169

## Beschreibung

Die Erfindung betrifft ein unterirdisches Flüssigkeitsmanagementsystem für Minen, ein Wasserwerk aufweisend das Flüssigkeitsmanagementsystem und ein Ausgabesystem sowie ein Verfahren zum Betrieb eines Flüssigkeitsmanagementsystems.

Beispielsweise in Südafrika oder Süd- und Mittelamerika und in zahlreichen anderen Ländern und Regionen der Welt gibt es stillgelegte oder noch im Betrieb befindliche Minen bzw. Bergwerke, die teilweise bis auf sehr große Tiefen (beispielsweise 2000 bis 5000m) reichen. In diesen Minen und Bergwerken gibt es auf unterschiedlichen Niveaus Kavitäten. Diese können bereits zum Teil natürlich mit Wasser gefüllt sein.

Aus der DE 103 61 590 A1 ist ein Pumpspeicherwerk bekannt, bei dem zumindest für das Unterbecken künstlich geschaffener Hohlraum in einer Schachtanlage verwendet wird.

Die DE 195 13 817 B4 beschreibt ein Pumpspeicherwerk, welches in einer Grube eines bestehenden oder ausgeräumten Tagebaus einer Braunkohlelagerstätte angeordnet wird. Dabei wird die Bautiefe der vorgenannten Grube ausgenutzt, um die für das Pumpspeicherwerk notwendigen Speicherbecken mit entsprechendem Höhenunterschied zueinander vorzusehen. Wenigstens das untere Becken ist unterhalb des Umgebungsniveaus angeordnet. Die künstlich errichteten Speicher können durch den bei der Ausbeutung der Braunkohlelagerstätte anfallenden Abraum errichtet werden.

Aus der DE 100 28 41 ist es bekannt, ein Wasserkraftwerk als blockartige bauliche Einheit mit zylindrischer Grundform bereitzustellen, die auf der Geländeoberfläche steht oder in das Gelände ganz oder teilweise eingelassen wird, um unabhängig von natürlichen Geländetopographien und natürlichen Wasserpotentialen künstlich Wasserkraft nutzbar zu machen. In dem künstlich errichteten, geschlossenen Bauwerk sind zwei übereinander angeordnete Speicher vorgesehen. In einem Speicherbetrieb wird mittels einer Pumpe Wasser von dem unteren in den oberen Speicher gepumpt. In einem Energiegewinnungsbetrieb wird das Wasser von dem oberen Speicher über eine zwischen den Speichern angeordnete Turbine zur Stromerzeugung in den unteren Speicher zurückgeleitet. Die für die Pumpe benötigte Energie kann mittels Windkraft- oder Solaranlagen oder einer Geothermieeinheit zur Verfügung gestellt werden.

Das Dokument DE-A1-102008007169 offenbart ein unterirdisches Flüssigkeitsmanagementsystem gemäß dem Oberbegriff des Anspruchs 1 und ein Verfahren zum Betrieb eines Flüssigkeitsmanagementsystems mit Merkmalen des Anspruchs 19.

Der Stand der Technik zeigt somit lediglich zur Energiegewinnung vorgesehene Pumpspeicherwerke, wobei die Speicherbecken überwiegend künstlich und gesondert in dem Boden vorgesehen werden. Lediglich die DE 103 61 590 A1 schlägt vor, ein Unterbecken eines Pumpspeicherwerks aus einer künstlich geschaffenen Schachtanlage herzustellen.

Es ist somit eine Aufgabe der vorliegenden Erfindung, ein System bereitzustellen, welches auf einfache und kostengünstige Weise für ein umfassendes Flüssigkeitsmanagement (bspw. Wassermanagement) zur Verfügung steht und neben der Energiegewinnung und Energiespeicherung auch zur Speicherung und Reinigung von in einer Mine befindlichen Flüssigkeiten dient.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Gemäß einem ersten Aspekt wird ein unterirdisches Flüssigkeitsmanagementsystem für Minen zur Energiegewinnung, Energiespeicherung, Speicherung und Reinigung von in der Mine oder seiner natürlichen Umgebung befindlichen Flüssigkeiten (bspw. Wasser und/oder Oberflächenwassern) gemäß Anspruch 1 bereitgestellt; umfassend also auch den Abbau oder die Beseitigung von Verunreinigungen (u.a. auch von Feststoffen) von Flüssigkeiten aus der natürlichen Umgebung. Unter Flüssigkeit wird daher im Folgenden jede entweder natürlich oder künstlich in die Hohlräume der Mine gelangende oder in der natürlichen Umgebung der Mine befindliche Flüssigkeit verstanden, insbesondere Grundwasser oder Oberflächenwasser (bspw. Regenwasser). Das System weist wenigstens einen erster Speicher, welcher durch einen Hohlraum der Mine gebildet ist, und wenigstens einen zweiten Speicher auf. Wenigstens die Sohle des zweiten Speichers ist oberhalb derer des ersten Speichers angeordnet. Besonders vorzugsweise ist der zweite Speicher oberhalb des ersten Speichers angeordnet. Das unterirdische Flüssigkeitsmanagementsystem weist ferner auf: wenigstens eine die Speicher verbindende Leitung zum Durchleiten der Flüssigkeit, wenigstens eine Pumpenvorrichtung zum Befördern der Flüssigkeit durch die Leitungen von dem ersten Speicher in den zweiten Speicher, und eine Geothermieeinrichtung zur Gewinnung von geothermischer Energie wenigstens zum Betreiben der Pumpe und vorzugsweise auch zum Betreibern weiterer Komponenten des Systems, also für den Eigenbedarf des Systems, und gegebenenfalls auch zur Bereitstellung für Dritte, also beispielsweise durch Einspeisung der gewonnenen Energie in ein Stromnetz (elektrische Energie) oder in einen Wärmespeicher (Wärmeenergie). Die Geothermieeinrichtung kann zudem zur Gewinnung von Wärme bzw. Kälte bereitgestellt werden, um diese bspw. für umliegende Wohn- oder Industriegebiete oder in der Mine selbst zu nutzen; bspw. als Wärmekraftwerk/Wärmepumpe bzw. Energieanlage.

Mit dem erfindungsgemäßen System ist es somit auf einfache und kostengünstige Weise möglich, bereits vorhandene Kavitäten einer Mine ohne weitere große Umbaumaßnahmen für ein umfassendes Flüssigkeitsmanagement (Speicherung und Reinigung von Flüssigkeiten und Feststoffen und (gleichzeitige) Energiegewinnung und Energiespeicherung) zu nutzen. Das Flüssigkeitsmanagement umfasst dabei beispielsweise die Rückführung des Systems in seinen natürlichen Zustand, also die Renaturierung der Mine und/oder der Flüssigkeiten, insbesondere des Grundwassers und des Oberflächenwassers. Ferner umfasst das Flüssigkeitsmanagement den Abbau von Kontaminierungen sowohl in dem Wasser (Grund- und Oberflächenwasser) als auch in der Mine, also den geologischen Schichten selbst. Ferner findet folglich auch ein umfassender Grundwasserschutz statt, da das natürlich vorliegende Grundwasser einer bestimmten geologischen Schicht in der Mine gereinigt und insbesondre nicht weiter belastet wird. In Synergie zu dem umweltschonenden System kann die in Minen aufgrund ihrer Tiefe besonders gut zugreifbare Geothermie, also Erdwärme, zur elektrischen Energiegewinnung und ggf. zusätzlich zur Gewinnung von Wärme und/oder Kälte genutzt werden; insbesondere für den Betrieb der Pumpe des Flüssigkeitsmanagementsystems bzw. die Mine an sich. Durch die Energiegewinnung aus der Geothermie kann zudem für den Minenbetreiber die Abhängigkeit von externen Energielieferanten (bspw. für Strom, Wärme, Kälte, ...) verringert werden, während gleichzeitig wenigstens dieser Teil der Energieversorgung mit nachhaltiger (regenerativer) Energie stattfindet.

Vorzugsweise werden alle oder wenigstens ein großer Teil der für das unterirdische Fluidmanagementsystem zu verwendenden Speicher durch Hohlräume der Mine gebildet. Auf diese Weise ist ein zusätzliches Vorsehen externer Tanks nicht mehr notwendig und die Bereitstellung des Flüssigkeitsmanagementsystems ist deutlich vereinfacht sowie kostengünstig und einfach in seiner Herstellung.

Vorzugsweise sind zwischen und/oder in den Speichern Reinigungsstufen vorgesehen. Auf diese Weise können kontaminierte Flüssigkeiten auf umweltschonende Weise und bereits in dem System selbst gereinigt werden. Dies führt zu einem effektiven und effizienten Abbau von Kontaminierungen in allen in der Mine befindlichen Wassern, insbesondere zu einem besonders ausgeprägten Grundwasserschutz, der sich auch positiv auf eine Renaturierung des Systems auswirkt.

Zu einer Kontamination der Flüssigkeit in den Speichern kann es beispielsweise aufgrund des in der Mine abgebauten Materials (z.B. Uran) oder durch das zum Abbau verwendete Material (z.B. Quecksilber für die Goldgewinnung) kommen. Eine Kontamination liegt somit in einer bestimmten geologischen Schicht vor oder gelangt durch Verunreinigung des Grundwassers oder von in das System gelangenden sonstigen Flüssigkeiten (bspw. Wassern und Oberflächenwassern) in diese Schicht oder sie liegt wenigstens in der in den Hohlräumen befindliche Flüssigkeit (bspw. Grundwasser) vor.

Insbesondere in Minen sind entsprechende Hohlräume, die erfindungsgemäß als Speicher genutzt werden, in unterschiedlichen Grundwasserleitern angeordnet und/oder sie durchstoßen mehrere Grundwasserleiter. Grundwasserleiter, die mitunter auch als Aquifere bezeichnet werden, sind wasserführende, natürliche Schichten bzw. Gesteinskörper mit Hohlräumen, die zur Leitung von Grundwasser geeignet sind. Grundwasserleiter werden geologisch durch wasserundurchlässige Schichten, den so genannten Aquifugen, voneinander getrennt bzw. begrenzt. Beim Bau bzw. der Erschließung der Mine werden in der Regel verschiedene Aquifere durchstoßen, die beispielsweise nach der Stillung der Mine häufig künstlich oder natürlich (mit Grundwasser) geflutet werden. Beim Fluten der Mine kommt es dazu, dass Flüssigkeiten (hier bspw. Grundwasser) beispielsweise aus mit Uran kontaminierten geologischen Schichten sich mit Flüssigkeiten/Wasser aus nicht kontaminierten Schichten vermengt, was zu einer unnötigen Verunreinigung der gesamten Flüssigkeit in der Mine führt.

Um diese unkontrollierte Vermengung des Wassers zu unterbinden, und somit größere Schäden am Grundwasser und somit am umliegenden Ökosystem zu vermeiden, sind vorzugsweise an geeigneten Stellen die vorgenannten Reinigungsstufen zwischengeschaltet bzw. vorgesehen, in denen ein Reinigungsprozess für die kontaminierte Flüssigkeit durchgeführt werden kann. Die unkontrollierte Vermengung des Wassers kann zudem durch geeignete bauliche Trennmaßnahmen vermieden werden. Auf diese Weise können Verunreinigungen bspw. im Grundwasser beseitigt oder wenigstens stark reduziert werden, so dass langfristige Schäden am Ökosystem verhindert und das Grundwasser für Mensch und Natur wieder brauchbar gemacht werden können.

Um dies zu erreichen, weist die Reinigungsstufe vorzugsweise mindestens eine Filtervorrichtung zum Reinigen der Flüssigkeit auf, vorzugsweise wenigstens in oder zwischen Speichern, besonders vorzugsweise wenigstens in oder zwischen Speichern in kontaminierten Schichten. Mit der Filtervorrichtung ist ein gesteigerter Abbau von Kontaminierungen möglich, der sich wiederum positiv auf das Grundwasser und seine Reinheit/Reinigung auswirkt, da dieses aufgrund der beseitigten oder wenigstens stark reduzierten Kontamination in seiner Qualität deutlich gesteigert werden kann.

Die Filtervorrichtung kann hierzu einerseits mit der Pumpvorrichtung derart strömungstechnisch verbunden sein, dass die Flüssigkeit bei einem Pumpprozess der Pumpvorrichtung gereinigt wird, vorzugsweise dass die Flüssigkeit beim Durchleiten durch die Leitungen gereinigt wird. Andererseits kann zusätzlich oder alternativ wenigstens ein Speicher zumindest teilweise mit porösem Material gefüllt sein, welches dann die Filtervorrichtung bildet. Hierzu wird auch auf das wasserspeichernde und wasserreinigende System gemäß der EP 2 058 441 A1 verwiesen, dessen Gegenstand vergleichbar auch als Filtervorrichtung in Speichern der vorliegenden Erfindung eingesetzt werden kann.

So kann die Filtervorrichtung bspw. ferner aufweisen: mindestens eine im Wesentlichen horizontal im Speicher ausgerichtete Barrierenschicht zur Verlängerung des Sickerwegs der Flüssigkeit, wobei die Barrierenschicht mit mindestens einem Durchlass für die Flüssigkeit versehen ist, und sich oberhalb und unterhalb der Barrierenschicht poröses Material befindet; und einen Auffangbehälter zum Sammeln gereinigter Flüssigkeit, der sich von der Sohle des Speichers in im Wesentlichen vertikaler Richtung nach oben erstreckt. Der Wasserauffangbehälter weist wenigstens unterhalb der untersten Barrierenschicht mindestens eine Öffnung auf, durch die die Flüssigkeit fließen bzw. sickern kann.

In Weiterbildung der zuletzt genannten Filtervorrichtung kann eine Pumpvorrichtung in dem Wasserauffangbehälter angeordnet sein. In diesem Fall erstreckt sich eine Leitung von der Pumpvorrichtung in vertikaler Richtung nach oben wenigstens aus dem Auffangbehälter heraus (und somit folglich in den entsprechenden Speicher hinein). Die gereinigte Flüssigkeit kann somit dem Reinigungskreislauf erneut zugeführt werden, um den Reinigungsgrad der Flüssigkeit weiter zu erhöhen. In einer bevorzugten Ausführungsform erstreckt sich die vorgenannte Leitung zusätzlich auch aus dem Speicher selbst heraus. Somit ist auf einfach Weise einerseits der Rückfluss der Flüssigkeit in den Reinigungskreislauf und anderseits die Bereitstellung der gereinigten Flüssigkeit in anderen Speichern oder in die Umgebung nach außen gegeben.

Alternativ oder zusätzlich kann, in Weiterbildung der zuletzt genannten Filtervorrichtung, der Auffangbehälter auch derart angeordnet sein, dass er oberhalb einer Verbindungsöffnung, die zu einem darunter liegenden Speicher führt, angeordnet ist, wobei der Auffangbehälter die Verbindungsöffnung im Wesentlichen umgibt. Somit kann an die Reinigungsvorrichtung eine zweite, darunter liegende Reinigungsvorrichtung angeschlossen bzw. vorgesehen werden, was die Effektivität der Reinigungsstufe erhöht. Zudem kann durch Vorsehen von Turbinen in der Verbindungsöffnung zusätzlich Energie gewonnen werden, wenn die Flüssigkeit von dem Auffangbehälter in den darunter liegenden Speicher vorzugsweise wahlweise abgelassen wird.

Die Reinigungsstufe kann ferner wenigstens eine Reinigungsvorrichtung zum Anheben oder Absenken des pH-Wertes der Flüssigkeit aufweisen. Diese Reinigungsvorrichtung weist vorzugsweise wenigstens eine Kalkschicht auf, durch die und/oder entlang der die Flüssigkeit zur pH-Wert-Veränderung geleitet wird. Auf diese Weise ist es möglich, beispielsweise Grundwasser, welches in manchen Regionen einen besonders niedrigen pH-Wert aufweist (von ca. 2-3), auf ein gewünschtes Niveau anzuheben, besonders vorzugsweise in einen neutralen pH-Wert Bereich. Es ist jedoch auch denkbar, dass Wasser oder andere Flüssigkeiten mit einem beliebigen aktuellen pH-Wert auf einen gewünschten, von dem aktuellen pH-Wert abweichenden Wert angehoben oder abgesenkt werden. Somit kann neben der oder zur Reinigung der Flüssigkeit auch deren pH-Wert angepasst werden.

Erfindungsgemäß erstreckt sich wenigstens ein Speicher über wenigstens eine nichtkontaminierte Schicht und eine kontaminierte Schicht und ist eine künstliche Barriere in dem sich über die Schichten erstreckenden Speicher vorgesehen, die sich vorzugsweise entlang einer die kontaminierte Schicht von der nichtkontaminierten Schicht trennenden Aquifuge erstreckt. Auf diese Weise kann sicher verhindert werden, dass sich kontaminierte Flüssigkeit mit nicht kontaminierter Flüssigkeit unnötig vermischt, auch wenn sich ein Speicher über mehrere Grundwasserleiter erstreckt. Dies führt zudem zu einem verbesserten Grundwasserschutz, insbesondere, da nichtkontaminiertes Grundwasser nicht unnötig mit kontaminierten (Grund- bzw. Oberflächen-)Wasser oder sonstigen kontaminierten Flüssigkeiten in Verbindung kommt. In Weiterbildung kann in der Barriere auch eine Durchgangsöffnung vorgesehen sein, in deren Strömungsweg eine Turbine zur Stromgewinnung angeordnet ist, und die mittels eines Sperrventils verschließbar ist.

Die Leitungen im Allgemeinen erstrecken sich besonders vorzugsweise in im Wesentlichen vertikaler Richtung nach oben aus dem jeweiligen Speicher heraus in wenigstens einen darüber angeordneten Speicher und/oder aus der Mine heraus. "Aus der Mine heraus" bedeutet insbesondere, dass die besagte Leitung sich bis an die Erdoberfläche und ggf. darüber hinaus in die Umgebung erstreckt und somit vorzugsweise von außen zugänglich ist.

Ferner vorzugsweise ist die Geothermieeinrichtung bzw. die Geothermie die primäre Energiequelle, wobei jedoch zusätzlich auch weitere, insbesondere erneuerbare Energiequellen, wie beispielsweise eine Windkraftanlage für Windenergie, eine Solaranlage für Solarenergie und/oder ein Pumpspeicherwerk für Strömungsenergie, und dergleichen zusätzlich zur Verfügung gestellt sein kann. Auf diese Weise ist eine ausreichende Energieversorgung des unterirdischen Flüssigkeitsmanagementsystems zu jeder Zeit gegeben, wobei dies mittels erneuerbarer Energien bereitgestellt wird, wodurch die Umwelt nicht zusätzlich belastet wird. Die durch die regenerativen Energiequellen gewonnene Energie - aber auch jede extern zugeführte Energie - kann durch Speichern der Flüssigkeit in einem höher gelegene Speicher gespeichert werden und durch wahlweises Ablassen der Flüssigkeit in einen tiefer gelegenen Speicher durch Antreiben einer im Strömungsweg angeordneten Turbine jederzeit in Energie (bspw. Strom) umgewandelt werden (Pumpspeicherwerk).

Es ist ferner möglich, dass ein Speicher als Flüssigkeitsvorrat bzw. Flüssigkeitsreservoir ausgebildet ist, in dem Flüssigkeit gesammelt und bereitgestellt wird, bspw. zur Bereitstellung für den Betrieb der Mine selbst oder, bei Wasser als Flüssigkeit, als Brauch- oder Trinkwasserreservoir oder auch zur Renaturierung des Systems und seiner Umgebung. Es ist somit möglich, dass für den Betrieb der Mine oder nach ihrer Stilllegung zur Bereitstellung in jeglicher Form Flüssigkeit (insbesondere Grund- und/oder Oberflächenwasser) aus eigener Quelle bezogen werden kann. Auf diese Weise wird verhindert, dass natürliche Ressourcen der Umwelt, wie beispielsweise Wasser aus umliegenden Flüssen oder Seen, verwendet werden, was zu einer Schonung der Umwelt mangels unnötiger Eingriffe in dieselbe führt und zudem eine Renaturierung der Mine, ihrer Umgebung und der gereinigten Flüssigkeiten fördern kann. Indem die Mine sich selbst versorgt, ist sie auch nicht mehr auf ein öffentliches Wasserangebot angewiesen, was insbesondere in Gebieten mit geringen Wasservorkommen von hoher Wichtigkeit ist und den Einsatzbereich erweitert oder wenigstens aus ökonomischer Sicht attraktiver macht.

Besonders vorzugsweise ist die Flüssigkeit Wasser, vorzugsweise Grundwasser und/oder Oberflächenwasser oder zur Flutung der Mine künstlich bereitgestelltes Wasser. Dieses kann, wie zuvor bereits beschrieben, auf vielfältige Weise wieder bzw. weiter verwendet werden; beispielsweise zur Renaturierung, wobei diese durch den Abbau der Kontamination weiter gefördert wird.

Vorzugsweise sind Trennwände oder Trennschichten aus Ton oder Tongestein in dem unterirdischen Flüssigkeitsmanagementsystem dort vorgesehen, wo kontaminierte Flüssigkeiten anliegen bzw. hindurchfließen, um insbesondere mit radioaktiven Stoffen kontaminierte Flüssigkeiten zu reinigen. Auf diese Weise wird eine effektive Reinigungsvorrichtung für insbesondere mit radioaktiven Stoffen kontaminierte Flüssigkeiten bereitgesellt.

Gemäß einem weiteren Aspekt beschreibt die Erfindung ein Wasserwerk zur Bereitstellung von Trink- und Brauchwasser, welches das unterirdische Flüssigkeitsmanagementsystem als Wassermanagementsystem sowie ferner ein Ausgabesystem zum Bereitstellen des Wassers aus dem Wassermanagementsystem aufweist.

Ferner ist ein Verfahren zum Betrieb eines Flüssigkeitsmanagementsystems offenbart.

Die Erfindung wird nun anhand von Ausführungsbeispielen beschrieben, die in den Figuren der begleitenden Zeichnungen dargestellt sind.
- Fig. 1: zeigt ein unterirdisches Flüssigkeitsmanagementsystem gemäß einem ersten nicht erfindungsgemäßen Ausführungsbeispiel,
- Fig. 2: zeigt ein unterirdisches Flüssigkeitsmanagementsystem gemäß einem zweiten nicht erfindungsgemäßen Ausführungsbeispiel,
- Fig. 3: zeigt ein unterirdisches Flüssigkeitsmanagementsystem gemäß einem Ausführungsbeispiel der Erfindung,
- Fig. 4: zeigt ein unterirdisches Flüssigkeitsmanagementsystem gemäß einem dritten nicht erfindungsgemäßen Ausführungsbeispiel,

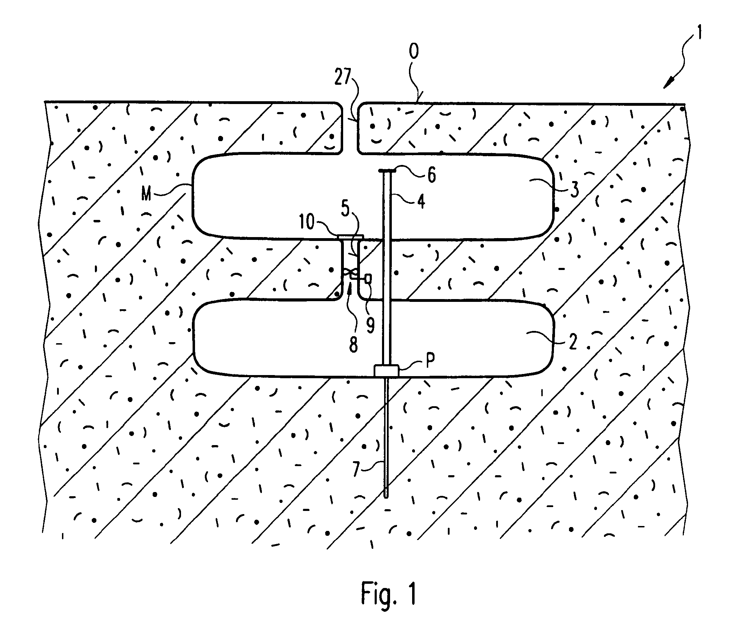

Fig. 1 zeigt ein nicht erfindungsgemäßes unterirdisches Flüssigkeitsmanagementsystem 1. Das unterirdische Flüssigkeitsmanagementsystem 1 weist einen ersten Speicher 2 auf. Dieser Speicher 2 ist durch einen oder mehrere Hohlräume einer Mine M gebildet. Als Mine werden erfindungsgemäß alle Arten von Minen, Bergwerken und dergleichen verstanden, welche unterirdische Hohlräume aufweisen, sowie alle Arten von natürlichen Höhlen und Höhlensystemen.

Oberhalb des ersten Speichers 2 ist wenigstens ein zweiter Speicher 3 angeordnet. Dieser zweite Speicher 3 kann dabei ein unabhängig von den Hohlräumen der Mine zusätzlich bereitgestellter Speicher sein; also bspw. in der Umgebung der Mine (oberhalb der (Erd-)Oberfläche O) bereitgestellter Speicher. Vorzugsweise ist der zweite Speicher 3, wie auch der erste Speicher 2, durch Hohlräume der Mine M gebildet. Auf diese Weise ist es möglich, bereits bestehende Strukturen einer Mine M auf einfache und kostengünstige Weise für ein unterirdisches Flüssigkeitsmanagementsystem zu nutzen. Die Erfindung ist jedoch nicht auf eine bestimmte Anzahl an Speichern beschränkt und kann beliebig viele Speicher aufweisen; insbesondere abhängig davon, wie viele Speicher in der Mine M vorgesehen sind. Theoretisch kann aber auch die Anzahl der Speicher künstlich erweitert werden, indem bspw. weitere Schächte vorgesehen oder einzelne Schächte künstlich in mehrere Teilschächte unterteilt werden. Auch kann die Anzahl der Speicher kleiner als die in der Mine M vorgesehenen Speicher sein, indem nicht benötigte Speicher nicht in das System integriert werden.

Während die Speicher 2, 3 in Fig. 1 mit ihrem gesamten Volumen übereinander angeordnet sind, so ist es auch denkbar, dass wenigstens die Sohle des zweiten Speichers 3 oberhalb derer des ersten Speichers 2 angeordnet ist. In diesem Fall sind die Speicher 2, 3 folglich in horizontaler Richtung zueinander versetzt angeordnet. Entscheidend ist lediglich, dass die Speicher derart angeordnet sind, dass ein durch Gravitation herbeigerufener Fluss von Flüssigkeit von einem höheren Niveau eines Speichers 3 auf ein niedrigeres Niveau in einen anderen Speicher 2 erfolgen kann.

Unter Flüssigkeit kann erfindungsgemäß jede Flüssigkeit verstanden werden. Vorzugsweise ist die Flüssigkeit Wasser, wobei es sich hierbei um Grund- und/oder Oberflächenwasser und/oder künstlich in die Mine geleitetes Wasser handeln kann. Auf diese Weise wird ein Flüssigkeitsmanagementsystem 1 bzw. ein Wassermanagementsystem zur Verfügung gestellt, mit dem Grundwasser, Oberflächenwasser, Brauchwasser oder Trinkwasser gespeichert und insbesondere auch gereinigt werden kann. Dies wiederum ist eine wichtige Grundlage für einen besonders guten Grundwasserschutz sowie zur verbesserten Möglichkeit der Renaturierung des gesamten Systems, seiner Umgebung und der Flüssigkeiten (bspw. Oberflächenwasser oder Grundwasser). Ferner ist es denkbar, dass die Flüssigkeit eine insbesondere nach Stilllegung der Mine darin gelagerte (beliebige) Flüssigkeit zum Zwecke der Speicherung, Reinigung, Energiegewinnung und/oder Energiespeicherung ist. In letztgenanntem Fall kann die Wirtschaftlichkeit eines Betriebes auch nach Schließung der Mine M erhalten bleiben, indem die Mine M auf kostengünstige und einfache Weise für die Lagerung und Bereitstellung von Flüssigkeiten "umgenutzt", also neu und weiter genutzt wird, während das Flüssigkeitsmanagementsystem 1 gleichzeitig zur Energiegewinnung mittels der eingelagerten Flüssigkeit genutzt werden kann. Liegen zahlreiche Speicher vor, so kann das Flüssigkeitsmanagementsystem 1 auch für verschiedene Flüssigkeiten gleichzeitig genutzt werden, wobei diese wiederum unabhängig voneinander zur Speicherung, Reinigung, Energiegewinnung und/oder Energiespeicherung genutzt werden können, wie im weiteren erläutert wird.

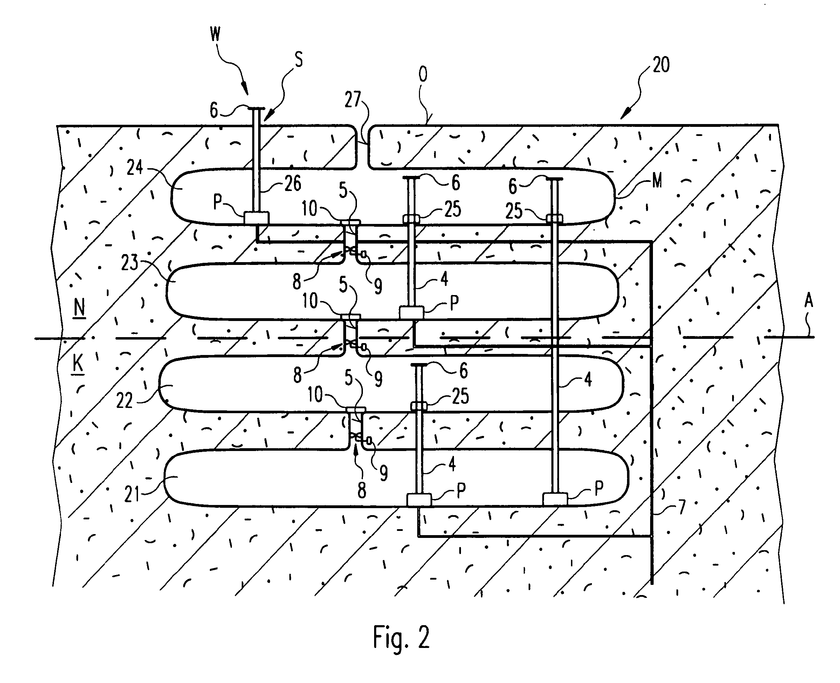

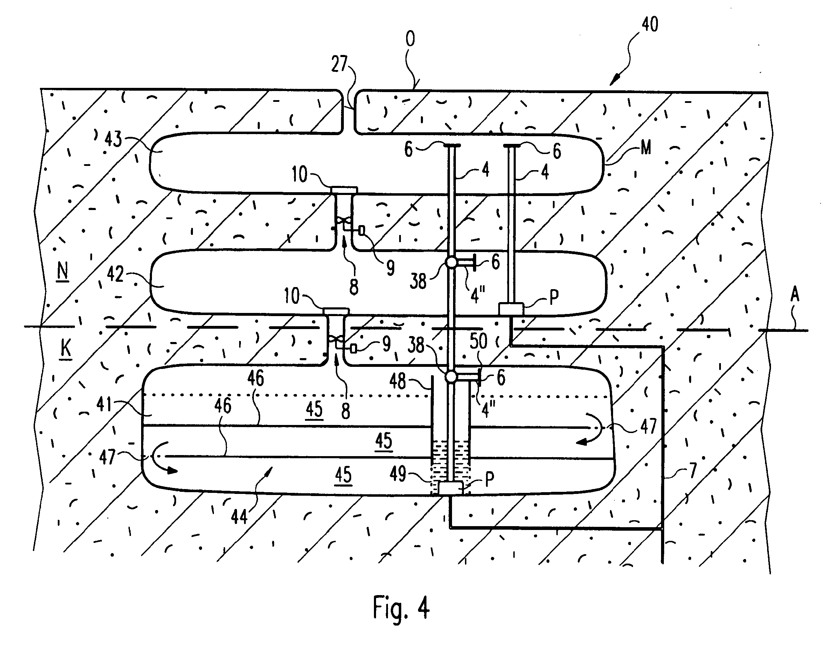

Das unterirdische Flüssigkeitsmanagementsystem 1 weist ferner eine die Speicher 2, 3 verbindende Leitung 4 zum Durchleiten einer in der Mine M befindlichen Flüssigkeit auf. Das Flüssigkeitsmanagementsystem ist dabei nicht auf eine bestimmte Anzahl an Leitungen 4, 26 beschränkt. So können einzelne Speicher mit einer oder mehreren Leitungen 4 verbunden sein. Ferner können auch nur einzelne, mehrere oder alle Speicher untereinander verbunden sein (vgl. Fig. 2 bis Fig. 4). Ebenso ist es denkbar, dass einzelne, mehrere oder alle Speicher mit nur einem Leiter 4 verbunden sind (vgl. Fig. 4). Alternativ oder zusätzlich kann sich die Leitung 26 auch aus der Mine M heraus, also bis zur (Erd-)Oberfläche O oder über diese hinaus nach außen in die Umgebung der Mine M, erstrecken (vgl. Fig. 2).

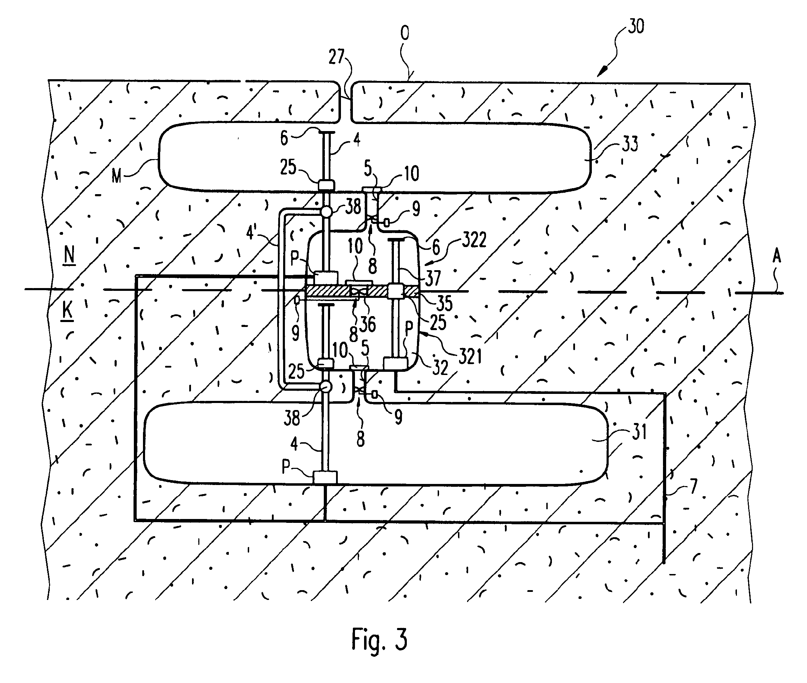

Die Leitungen 4, 26 sind vorzugsweise als Steigleitung ausgebildet und können entweder durch eine separat vorgesehene Steigleitung 4, 26, die bspw. auch schon während des Betriebes der Mine M bereitgestellt wurden, oder durch bereits vorhandene oder nachträglich eingebrachte, in der Mine M vorgesehene Verbindungsschächte 5, 27 gebildet werden. Die Leitungen 4, 26 erstrecken sich nach oben aus dem jeweiligen Speicher 2 in wenigstens einen oder mehrere oder auch alle darüber angeordneten Speicher 3 und/oder nach außen, also bis oberhalb der (Erd-)Oberfläche O. Dies wird in weiteren Ausführungsbeispielen noch näher beschrieben. Es sei angemerkt, dass die Erfindung nicht auf die in der Figur 3 gezeigte im Wesentlichen vertikale Ausrichtung der Leitungen beschränkt ist, solange die Leitungen die Beförderung der Flüssigkeit von einem niedrigeren Niveau zu einem höheren Niveau hin ermöglichen.

Um einen ungewollten Rückfluss der Flüssigkeit von einem höheren Niveau, also dem zweiten Speicher 3 in Figur 1, zu einem niedrigeren Niveau hin, also zu dem ersten Speicher 2 in Figur 1 hin, über die Leitung 4, 26 zu verhindern, ist vorzugsweise am oberen Ende der Leitung 4, 26 (oder bzw. in dem Schacht 5, wenn dieser als Leitung dient) ein Unterdruckventil 6 vorgesehen.

Um die Flüssigkeit durch die Leitung 4 zu leiten, ist eine Pumpvorrichtung P in dem entsprechend der Fließrichtung tiefer gelegenen Speicher 2 vorgesehen, über die die Flüssigkeit aus dem ersten Speicher 2 angesaugt und über die Leitung 4 in den zweiten Speicher 3 befördert wird. Hierzu ist die Pumpe P vorzugsweise auf der Sohle des ersten, tiefer gelegenen Speichers 2 angeordnet, um eine möglichst effektive Förderung der gesamten Flüssigkeit aus dem ersten Speicher 2 zu ermöglichen.

Zum Betreiben der Pumpe P ist erfindungsgemäß eine in den Figuren nur schematisch dargestellte Geothermieeinreichtung vorgesehen. Geothermieeinrichtungen sind hinlänglich bekannt und sollen daher an dieser Stelle nicht weiter beschrieben werden. Das Vorsehen einer Geothermieeinrichtung ist insbesondere deswegen vorteilhaft, da Minen M in der Regel bis auf große Tiefen reichen und somit die Gewinnung von Geothermie (Erdwärme) aufgrund der geringen, zusätzlichen Bohrtiefe einfach ist im Vergleich zu dem Fall, wo die Geothermie ausgehend von der Erdoberfläche O gewonnen werden muss. Somit kann auf einfache Weise und mittels regenerativer Energien auch umweltschonend und unabhängig von äußeren Einflüssen der Betrieb der Pumpe P zu jeder Zeit gewährleistet werden. Ferner kann die gewonnene Energie (elektrische Energie, Wärme, Kälte) für andere Komponenten innerhalb oder außerhalb des Systems bereitgestellt und/oder in ein Stromnetz oder einen Wärme- oder Kühlkreislauf bzw. -netz oder dergleichen eingespeist werden.

Die Geothermie kann zusätzlich für ein nicht dargestelltes aber hinlänglich bekanntes Wärmekraftwerk/Wärmepumpe genutzt werden, wobei die Wärmeenergie für das System selbst genutzt oder von dem System zur externen Nutzung abgeführt werden kann. Es ist somit möglich, die gewonnene thermische Energie direkt zu nutzen, indem diese auf bekannte Weise abgeführt wird und die thermische Energie indirekt zu nutzen, indem diese in elektrische Energie umgewandelt wird.

In Ergänzung zu der Wärmepumpe kann die Geothermieeinrichtung 7 auch als Energieanlage zur Produktion sowohl von Wärme als auch von Kälte vorgesehen sein. Bspw. bei Direktverdampfer-Erdwärmeanlagen entsteht Kälte als Abfallprodukt bei der Wärmegewinnung. Um diese ebenfalls zugänglich zu machen und zu nutzen, können bei der Installation der Geothermieeinrichtung 7 zwei Tiefenbohrungen vorgenommen werden, in denen jeweils eine Sonde zirkuliert. Aufgrund geothermischer Wärme verdampft darin flüssiges Kältemittel, nimmt die Energie auf und gelangt durch Eigendruck zu einem Verdichter. Bei der Wärmeentnahme kühlt die Sonde folglich ab. Die gewonnene Kälte kann sodann über einen zweiten Kreislauf innerhalb der Sonde genutzt werden, wobei als Kältemittel bspw. ein Ammoniakgemisch verwendet wird.

Die durch die Geothermieeinrichtung 7 als Wärmepumpe bzw. Energieanlage gewonnene bzw. produzierte Wärme und Kälte kann, wie auch die gewonnene elektrische Energie, für die (umliegende) Industrie, Wohngebiete und dergleichen oder die Mine M selbst genutzt werden. Die Geothermieeinrichtung 7 bzw. die (bei der Umnutzung der Mine) gewonnene Erdwärme kann somit gleichermaßen als Energielieferant für Strom, Wärme und Kälte, bspw. zum Verkauf an Dritte oder für den Eigenbedarf (bspw. der aktive Mine), genutzt werden.

Zusätzlich zu der Geothermieeinrichtung 7 als primäre Energiequelle ist es ferner denkbar, dass das System 1 weitere, Energiequellen aufweist. Insbesondere können alle heutigen und künftigen regenerativen Energiequellen verwendet werden. Hierzu bieten sich insbesondere Windkraftanlagen (nicht gezeigt) zur Erzeugung von Windenergie, Solaranlagen (nicht gezeigt) zur Erzeugung von Solarenergie, Pumpspeicherwerke zur Erzeugung von Strömungsenergie oder andere bekannte Energiequellen an.

Insbesondere das Pumpspeicherwerk ist besonders vorteilhaft, da es platz- und kostensparend in dem unterirdischem Flüssigkeitsmanagementsystem 1 integriert werden kann. Dazu werden vorzugsweise bereits vorhandene, vertikale Verbindungsschächte 5 oder andere Durchgänge zwischen den vorzugsweise übereinander angeordneten Speichern 2, 3 verwendet. In diese wird hierzu bspw. eine Turbine 8 oder eine andere vergleichbare Stromerzeugungsvorrichtung zur Stromgewinnung vorgesehen. Indem die Flüssigkeit von dem zweiten, höher gelegenen Speicher 3 in den ersten, tiefer gelegenen Speicher 2 aufgrund von Gravitationskräften abfließt, wird die Turbine 8 angetrieben und erzeugt Strom. Dazu ist beispielsweise ferner ein Generator 9 vorgesehen. Der Strom kann dann bspw. für die Mine M bereitgestellt oder in ein Stromnetz eingespeist werden.

Um die Durchflussmenge der Flüssigkeit von dem zweiten Speicher 3 zu dem ersten Speicher 2 zu regulieren, ist vorzugsweise in dem Strömungsweg zwischen dem zweiten Speicher 3 sowie der Wasserturbine 8 eine Verschließvorrichtung, bspw. ein Sperrventil 10, vorgesehen. Mit diesem Sperrventil 10 ist vorzugsweise eine stufenlose Regulierung der Durchflussmenge der Flüssigkeit möglich. In geschlossenem Zustand kann somit der zweite Speicher 3 in einem Speicherbetrieb als Speicher zur Bereitstellung der Flüssigkeit dienen, welche mittels der Pumpenvorrichtung P (angetrieben wenigstens durch Geothermie) aus einem niedrigeren Niveau in den oberen Speicher 3 gefördert wird. Die gespeicherte Flüssigkeit in dem zweiten Speicher 3 kann dann bspw. zur weiteren Verwendung aus dem zweiten Speicher 3 entnommen werden. Alternativ kann die gespeicherte Flüssigkeit bei Bedarf durch wahlweises Öffnen des Sperrventils 10 zur Erzeugung von Energie (Strom) verwendet werden, indem beim Durchfluss der Flüssigkeit von dem zweiten Speicher 3 zu dem ersten Speicher 2 die Turbine 8 angetrieben wird.

Es ist ferner denkbar, dass ein zusätzlicher, in den Figuren nicht dargestellter Speicher vorgesehen ist, welcher entweder ebenfalls durch Hohlräume der Mine M gebildet ist oder aber zusätzlich, beispielsweise oberhalb der (Erd-)Oberfläche O, angeordnet ist. Ein derartig angeordneter Speicher kann als Flüssigkeitsvorrat bzw. Flüssigkeitsreservoir ausgebildet sein, in dem Flüssigkeit gesammelt und bereitgestellt wird. Dieser Flüssigkeitsvorrat kann für den Betrieb der Mine M selbst oder auch für beliebige andere Zwecke bereitgestellt werden, beispielsweise zum Abtransport oder aber als Flüssigkeitsreservoir bzw. Wasserreservoir für die umliegende Bevölkerung bzw. Landwirtschaft oder zur Renaturierung. Das Flüssigkeitsreservoir kann auch durch einen der bereits zuvor beschriebenen Speicher, vorzugsweise den am nächsten zur (Erd-)Oberfläche O gelegenen Speicher 3, gebildet werden, indem besonders vorzugsweise der Abfluss zu den weiteren Speichern 2 (bspw. mittels des Sperrventils 10) blockiert oder verzögert wird.

Wie bereits beschrieben, können sich die die Speicher bildenden Hohlräume der Mine M über verschiedene Grundwasserleiter erstrecken. Es ist dabei denkbar, dass einige Speicher sich in nichtkontaminierten Schichten N und andere Speicher sich in kontaminierten Schichten K erstrecken. Kontaminierte Schichten K befinden sich dabei meist in größeren Tiefen, in denen der Abbau in der Mine M betrieben wird. Entweder durch das abgebaute/abzubauende Material oder ein zum Abbau verwendetes Material in der Mine M kann bspw. das Grundwasser verunreinigt werden, was zu einer Kontamination des Grundwassers und somit der entsprechenden geologischen Schicht führt. Dies ist beispielhaft in Figur 2 dargestellt, die ein unterirdisches Flüssigkeitsmanagementsystem 20 gemäß einem nicht erfindungsgemäßen zweiten Ausführungsbeispiel zeigt. Mit Bezug zu dem ersten nicht erfindungsgemäßen Ausführungsbeispiel sind gleiche Merkmale mit denselben Bezugszeichen versehen. Bezüglich aller entsprechenden Merkmale wird vollumfänglich auf obige Ausführungen zum ersten nicht erfindungsgemäßen Ausführungsbeispiel verwiesen. Es ist ferner festzuhalten, dass eine beliebige Kombination der Merkmale und Ausgestaltungsformen der Ausführungsbeispiele untereinander im Rahmen der Erfindung möglich sind.

Figur 2 zeigt eine Mine M mit vier Speichern 21, 22, 23, 24, die jeweils in vertikaler Richtung übereinander angeordnet sind. Die Erfindung ist jedoch nicht auf eine bestimmte Anzahl an Speichern oder die gezeigte Anordnung zueinander begrenzt. Vielmehr ist jede Anzahl an Speicher denkbar, wobei wenigstens ein Speicher (bzw. dessen Sohle) oberhalb wenigstens eines anderen Speichers (bzw. dessen Sohle) angeordnet sein muss.

Gemäß dem zweiten nicht erfindungsgemäßen Ausführungsbeispiel sind die beiden unteren Speicher 21, 22 in einer kontaminierten Schicht K angeordnet.

Die beiden oberen Speicher befinden sich in einer nichtkontaminierten Schicht N. Es ist beispielsweise aber auch denkbar, dass die nichtkontaminierten Schichten N und kontaminierten Schichten K anders angeordnet sind oder aber auch dass sich ein oder mehrere Schächte bzw. Speicher über wenigstens eine oder mehrere geologische Schichten erstrecken, wobei wenigstens eine der Schichten kontaminiert und wenigstens eine andere nichtkontaminiert sein kann. Letzteres wird mit Bezug auf Figur 3 noch näher erläutert.

Eine Trennung zwischen nichtkontaminierter Schicht N und kontaminierter Schicht K, welche sich meist in wasserführenden, natürlichen Schichten (Grundwasserleiter bzw. Aquifere) erstrecken, ergibt sich in der Regel auf natürliche Weise durch sogenannte Aquifugen, also wasserundurchlässige Schichten, wie beispielsweise Tone. Eine Aquifuge A ist beispielhaft und schematisch durch eine gestrichelte Linie in Figur 2 dargestellt.

Gemäß dem zweiten nicht erfindungsgemäßen Ausführungsbeispiel sind die beiden unteren Speicher 21, 22 mit einer Leitung 4 verbunden. Ebenso sind die beiden oberen Speicher 23, 24 sowie der unterste und der oberste Speicher 21, 24 mittels Leitungen 4 verbunden. Der oberste Speicher 24 ist ferner mittels einer weiteren Leitung 26 mit der Oberfläche O bzw. der Umgebung nach außen verbunden. Die Erfindung ist jedoch nicht auf eine derartige Anordnung der Leitungen 4, 26 beschränkt. Vielmehr kann jeder Speicher auf beliebige Weise mit jedem anderen Speicher oder der Oberfläche O über eine oder mehrere Leitungen 4, 26 verbunden sein, die vorzugsweise durch den Minenbetrieb bereits bereitgestellt sind bzw. waren.

Die Leitungen 4, 26 sind, wie auch in dem ersten nicht erfindungsgemäßen Ausführungsbeispiel beschrieben, vorzugsweise jeweils mit einer Pumpenvorrichtungen P zum Durchleiten einer Flüssigkeit versehen; es können auch, wo dies zweckmäßig ist, mehrere Leitungen 4 mit einer Pumpe P versehen sein. Die Pumpenvorrichtungen P werden wenigstens mittels Geothermie über eine Geothermieeinrichtung 7 angetrieben, wahlweise auch zusätzlich mittels anderer, vorzugsweise regenerativer Energiequellen.

Zwischen den Speichern 21, 22, 23, 24 sind jeweils Verbindungsschächte 5 vorgesehen, die vorzugsweise ebenfalls bei der Erschließung der Mine M bereits vorgesehen wurden. In wenigstens einem, mehreren oder allen (siehe Figur 2) der Schächte 5 kann ein Sperrventil 10 sowie eine strömungstechnisch nachgeschaltete Turbine 8 mit Generator 9 vorgesehen sein, über die Energie gewonnen werden können.

Um eine unkontrollierte Vermengung der sich in den Speichern 23, 24 in der nichtkontaminierten Schicht N befindlichen Flüssigkeit mit der in den Speicher 21, 22 in der kontaminierten Schicht K befindlichen Flüssigkeit zu unterbinden, und somit größere Schäden am Grundwasser und somit am umliegenden Ökosystem zu vermeiden, ist vorzugsweise ferner eine Filtervorrichtung 25 als Reinigungsstufe vorgesehen. Die Filtervorrichtung 25 ist gemäß Figur 2 strömungstechnisch mit der Pumpvorrichtung P verbunden. Vorzugsweise ist die Filtervorrichtung 25 in wenigstens einer, mehreren oder allen der die Speicher 21, 22, 23, 24 verbindenden Leitungen 4, 26 vorzugsweise stromabwärts der Pumpvorrichtung P derart angeordnet, dass die Flüssigkeit beim Durchleiten durch die Leitungen 4, 26 durch die Filtervorrichtung 25 geleitet und somit gereinigt wird. Es ist auch denkbar, dass die Filtervorrichtung 25 alternativ oder zusätzlich zu dem Pumpspeicherwerk (also Sperrventil 10, Turbine 8, Generator 9) in einem Schacht (Durchgang) 5 angeordnet ist, so dass eine Reinigung der Flüssigkeit beim Ablassen bzw. Durchleiten von einem oberen Speicher zu einem unteren Speicher stattfindet, bspw. also im Energiegewinnungsbetrieb.

Es ist somit möglich, durch Schließen des Sperrventils 10 zwischen denjenigen Speichern 22, 23, die im Übergang von der nichtkontaminierten Schicht N und der kontaminierten Schicht K angeordnet sind, die unteren Speicher 21, 22 von den oberen Speichern 23, 24 wahlweise systemtechnisch voneinander zu trennen. Auf diese Weise wird das Grundwasser in nichtkontaminierten Schichten N vor einer unnötigen Kontamination geschützt, während gleichzeitig die Kontamination in der kontaminierten Schicht abgebaut werde kann, um somit die Umgebung der Mine in ihren natürlichen Urzustand zurückzuführen, also zu Renaturieren.

In den unteren Speichern 21, 22 kann sodann ein geschlossener Reinigungskreislauf ablaufen, um die darin befindliche kontaminierte Flüssigkeit zu reinigen. Dazu wird, wie vorbeschrieben, die Flüssigkeit über die Pumpe P und die Leitung 4 von dem untersten Speicher 21 in den darüber liegenden Speicher 22 geleitet. Im Laufe dieses Pump- bzw. Speicherprozesses wird die Flüssigkeit mittels der in der Leitung 4 angeordneten Filtervorrichtung gereinigt. Die in den Speicher 22 geleitete und ggf. gespeicherte Flüssigkeit kann in einem Energiegewinnungsbetrieb durch Öffnen des zwischen den beiden unteren Speichern 21, 22 angeordneten Sperrventils 10 in den unteren Speicher 21 abfließen. Dabei wird die im Strömungsweg der Flüssigkeit angeordnete Turbine 8 mit der abfließenden Flüssigkeit des oberen Speichers 22 beaufschlagt. Somit können Verunreinigungen, beispielsweise im Grundwasser der kontaminierten Schicht K, gegebenenfalls im Laufe mehrerer Reinigungszyklen reduziert oder beseitigt werden, während gleichzeitig Energie gewonnen und die gereinigte Flüssigkeit anschließend bereitgestellt werden kann. Es ist somit möglich, durch einen Abbau der Kontamination des in die Speicher eindringen oder in diesen befindlichen Grundwassers (bspw. über mehrere Reinigungszyklen hinweg) das in der entsprechenden Aquifere befindliche Grundwasser zu reinigen und somit die Schicht in eine im Wesentlichen nichtkontaminierte Schicht zu überführen.

Grundsätzlich ist allen Ausführungsbeispielen gemein, dass die Speicher eine Be-/Entlüftungsvorrichtung aufweisen können, um ein Luftvolumen durch ab- oder zufließende Flüssigkeit in einem Speicher auszugleichen. Diese Be-/Entlüftungsvorrichtung kann eine Be-/Entlüftungsleitung (nicht dargestellt) sein, welche mit der Umgebung oberhalb der (Erd-)Oberfläche O verbunden ist und über die eine Belüftung oder Entlüftung der jeweiligen Speicher stattfindet.

Bis die Flüssigkeit in den unteren Speichern 21, 22 bzw. das Grundwasser in der kontaminierten Schicht K gereinigt ist, kann in bereits beschriebener Weise in den beiden oberen Speichern 23, 24 ebenfalls ein geschlossener Kreislauf zur Energiegewinnung und Flüssigkeitsspeicherung stattfinden. Wahlweise kann auch die Flüssigkeit in den oberen Speichern 23, 24 mit einer Filtervorrichtung 25 gereinigt werden.

Wenn die Flüssigkeit in dem unteren Reinigungskreislauf ausreichend gereinigt wurde, kann diese über eine weitere, mit einer Pumpe P versehenen Leitung 4 in eine oder mehrere der darüber angeordneten Speicher 22, 23, 24 befördert werden, wo sie entweder als Pumpspeicher zur Energiegewinnung bereitgestellt oder in einem der oberen Speicher oder einem weiteren, nicht dargestellten Speicher auf Vorrat gespeichert wird.

In einigen Regionen, in denen das erfindungsgemäße Flüssigkeitsmanagementsystem zum Einsatz kommt, hat das die Mine M umgebende und ggf. in diese eindringende Grundwasser einen sehr geringen pH-Wert von nur ca. 2 bis 3. Es ist somit ferner denkbar, dass die Reinigungsstufe ferner an entsprechender Stelle, vorzugsweise in oder zwischen den Speichern 21, 22, 23, 24, eine Reinigungsvorrichtung (nicht gezeigt) aufweist, mit welcher der pH-Wert der Flüssigkeit geändert werden kann; je nachdem, welchen pH-Wert zwischen 0 und 14 die Flüssigkeit aufweist und auf welchen gewünschten pH-Wert die Flüssigkeit haben soll, kann also der pH-Wert der Flüssigkeit wahlweise angehoben oder abgesenkt werden. Die Reinigungsvorrichtung kann dabei derart aufgebaut sein, dass die Flüssigkeit gezielt durch natürliche oder künstlich vorgesehene Kalkschichten oder kalkbeschichtete Vorrichtungen oder an diesen entlang geleitet wird. Während des Durch- bzw- Vorbeileitens löst sich der Kalk (oder ein anderer, in der Reinigungsvorrichtung vorgesehener Stoff) langsam in die Flüssigkeit und führt zu einer Anhebung/Absenkung des pH-Wertes und vorzugsweise zu einer Neutralisierung der durchgeleiteten Flüssigkeit (bspw. des Grundwassers). Die Reinigungsvorrichtung kann dabei bspw. in oder mit einer vorbeschriebenen Filtervorrichtung 25 ausgebildet sein. Beispielsweise kann die Reinigungsvorrichtung auch in einem kalkhaltigen Speicher (bspw. einer der Speicher 21, 22, 23, 24 in der Figur 2) vorgesehen werden, wobei bspw. die Wände dieses Speichers auf natürliche oder künstliche Weise mit einer Kalkschicht versehen sind. Die Reinigungsvorrichtung kann in oder zwischen jedem beliebigen Speicher und in jeder Schicht (kontaminiert; nichtkontaminiert) vorgesehen sein.

In Weiterentwicklung der vorbeschriebenen Reinigungsvorrichtung kann diese zusätzlich mit einem pH-Wert Sensor ausgestattet sein, der den pH-Wert in einem oder allen der Speicher misst. Auf Basis der gewonnenen Messergebnisse sowie des einzustellenden pH-Wertes kann die Flüssigkeit dann wahlweise durch die Reinigungsvorrichtung geleitet werden, so dass der pH-Wert entsprechend den individuellen Vorgaben eingestellt werden kann. Es ist dabei denkbar, dass die Reinigungsvorrichtung sowohl einen ersten Teil zum Anheben des pH-Wertes als auch einen zweiten Teil zum Absenken des pH-Wertes aufweist. Die in ihrem pH-Wert zu verändernde Flüssigkeit kann dann wahlweise gar nicht oder durch den ersten oder zweiten Teil der Reinigungsvorrichtung geleitet werden, je nachdem, ob der pH-Wert der Flüssigkeit beibehalten, angehoben oder abgesenkt werden soll.

In dem obersten Speicher 24 ist die sich zur Umgebung hin erstreckende Leitung 26 vorgesehen, die sich vorzugsweise bis oberhalb der (Erd-)Oberfläche O erstreckt. Die Leitung 26 weist eine Pumpvorrichtung P auf, die wahlweise in dem Speicher 24 oder außerhalb der Mine M, bspw. an der (Erd-)Oberfläche O angeordnet ist. Beispielsweise kann die Leitung 26 auch durch den den obersten Speicher 24 mit der Umgebung verbindenden Schacht 27 bereitgestellt oder wahlweise eingeführt werden. Diese Leitung 26 dient dann, ggf. im Zusammenhang mit der Pumpvorrichtung P und weiterer Anschlüsse zum Ableiten der Flüssigkeit aus dem als Vorratsreservoir dienenden Speicher 24, als Ausgabesystem S. Die Kombination aus Flüssigkeitsmanagementsystem 20 und Ausgabesystem S bildet somit ein Wasserwerk W. Die Flüssigkeit ist dann vorzugsweise Wasser, wie beispielsweise Grund- oder Oberflächenwasser oder künstlich in die Mine M geleitetes Wasser. Das Flüssigkeitsmanagementsystem 20 kann dann als Wassermanagementsystem bezeichnet werden. Ein derartiges Wasserwerk W dient zur Bereitstellung von Trinkwasser oder Brauchwasser, welches bei Bedarf aus dem Flüssigkeitsmanagementsystem 20 abgeleitet werden kann. Ebenso wird mit dem Wasserwerk W eine Renaturierung der Umgebung der Mine sowie der Flüssigkeit betrieben als auch ein verbesserter Grundwasserschutz bereitgestellt. Es sei angemerkt, dass neben dem obersten Speicher 24 zusätzlich oder alternativ jeder beliebige Speicher 21, 22, 23 eine Leitung 26 aufweisen kann, die sich bis oberhalb der (Erd-)Oberfläche O nach außen in die Umgebung erstreckt. Die Leitung 26 kann ferner ebenfalls mit einer Filtervorrichtung 25 versehen sein. Ebenso kann das aus der Mine M herausragende Ende der Leitung 26 mit einem Unterdruckventil 6 oder einem Anschluss zum Anschließen einer Absaugvorrichtung oder Sammelvorrichtung oder dergleichen versehen sein, um ausgegebene Flüssigkeit sicher aufzufangen. Die Leitung 26 kann auch in ein nicht dargestelltes Flüssigkeitsreservoir münden.

Figur 3 zeigt eine Ausführungsform eines erfindungsgemäßen unterirdischen Flüssigkeitsmanagementsystems 30. Mit Bezug zu den vorgenannten nicht erfindungsgemäßen Ausführungsbeispielen sind gleiche Merkmale mit denselben Bezugszeichen versehen. Bezüglich aller entsprechenden Merkmale wird vollumfänglich auf obige Ausführungen verwiesen. Es ist ferner festzuhalten, dass eine beliebige Kombination der Merkmale und Ausgestaltungsformen der Ausführungsbeispiele untereinander im Rahmen der Erfindung möglich sind.

Gemäß Figur 3 weist das unterirdischen Flüssigkeitsmanagementsystems 30 drei Speicher 31, 32, 33 gebildet aus Hohlräumen einer Mine M auf. Gemäß diesem Ausführungsbeispiel ist nun ein Fall beschrieben, bei dem sich (wenigstens) ein Speicher 32 derart erstreckt, dass er von einer nichtkontaminierten Schicht N in eine kontaminierte Schicht K hineinragt; sich also wenigstens ein Speicher durch mehrere geologische Schichten erstreckt, wobei wenigstens eine dieser Schichten eine kontaminierte Schicht ist.

In einem solchen Fall ist es möglich, dass alle in einer kontaminierten Schicht K befindlichen Speicher 31, 32 von Speichern 33 in nichtkontaminierten Schichten N bspw. durch Schließen des obersten Sperrventils 10 in dem Schacht 5 fluidtechnisch getrennt werden. Somit entsteht ein geschlossener Reinigungskreislauf zum Reinigen der Flüssigkeit in diesen Speicher 31, 32, wie dies bereits zuvor beschrieben wurde. Ist die Flüssigkeit gereinigt, so kann sie auf beliebige, zuvor beschrieben Weise mit Speichern 33 in nichtkontaminierten Schichten zur Energiegewinnung, Speicherung und ggf. weiteren Reinigung der Flüssigkeit verbunden werden. Das geschlossene oberste Sperrventil 10 kann dazu wieder wahlweise geöffnet werden.

In diesem Fall wird jedoch womöglich Flüssigkeit aus nichtkontaminerten Schichten N unnötig mit kontaminierter Flüssigkeit vermengt und somit verunreinigt. Es ist somit gemäß dem erfindungsgemäßen Ausführungsbeispiel denkbar, eine unkontrollierte Vermengung der Flüssigkeiten durch geeignete bauliche Trennmaßnahmen zu vermeiden und somit einen effektiven Grundwasserschutz bereitzustellen. Dies wird dadurch erreicht, eine künstliche Barriere 35 in dem sich über sowohl nichtkontaminierte Schichten N als auch kontaminierte Schichten K erstreckenden Speicher 32 vorzusehen, die diesen Speicher in einen unteren Bereich 321 und einen oberen Bereich 322 trennt. Die Barriere 35 ist vorzugsweise derart angeordnet, dass sie sich entlang der die kontaminierte Schicht K von der nichtkontaminierten Schicht N trennenden Aquifuge A erstreckt. Die Barriere 35 besteht vorzugsweise aus einem wenigstens für Flüssigkeiten impermeablen Material. Die Barriere 35 ist in dem Speicher 32 derart (abdichtend) angeordnet, dass keine Flüssigkeit von dem oberen Bereich 322 des Speichers 32, welcher in einer nichtkontaminierten Schicht N angeordnet ist, zu dem unteren Bereich 321 des Speichers 32, welcher in einer kontaminierten Schicht K angeordnet ist (und umgekehrt) gelangen kann. Somit wird durch das Zusammenspiel der Barriere 35 mit der Aquifuge A eine Vermengung von nichtkontaminierter und kontaminierter Flüssigkeit noch effektiver vermieden.

In der Barriere 35 kann ferner ein Durchgang 36 zum wahlweisen Verbinden der beiden Bereiche 321, 322 des Speichers 32 vorgesehen sein. Dieser ist vorzugsweise mit einer Verschließvorrichtung, wie z.B. einem Sperrventil 10, wahlweise verschließbar. Ferner kann in dem Durchgang 36 eine dem Sperrventil 10 fließtechnisch nachgeschaltete Turbine 8 mit Generator 9 vorgesehen sein.

Um eine unnötige Kontaminierung der Flüssigkeit in den oberen Speichern bzw. Speicherbereichen 33, 322 zu vermeiden, ist das Sperrventile 10 in der Barriere 35 während eines Reinigungsprozesses in den unteren beiden Speichern bzw. Speicherbereichen 31, 321 solange geschlossen, bis die Verunreinigung der Flüssigkeit ausreichend behoben wurde.

Wie Figur 3 zu entnehmen ist, sind jeweils übereinander liegende Speicher mittels Leitungen 4 sowie daran angeschlossenen Pumpenvorrichtungen P verbunden. Auf gleiche Weise sind auch die beiden Speicherbereiche 321, 322 des mittleren Speichers 32 miteinander verbunden, wobei sich die sie fluidtechnisch verbindende Leitung 37 vorzugsweise in abdichtender Weise durch die Barriere 35 erstreckt. In den Leitungen 4, 37 oder auch auf andere Weise (bspw. in den Schächten 5 bzw. dem Durchgang 36) kann ferner eine Filtervorrichtung 25 vorgesehen sein. Ebenfalls kann an gewünschter Stelle eine nicht dargestellte Reinigungsvorrichtung zur Veränderung des pH-Wertes der Flüssigkeit vorgesehen sein.

Die Pumpenvorrichtungen P sind in vorbeschriebener Weise an eine Geothermieeinrichtung 7 gekoppelt.

Wie Figur 3 weiter zu entnehmen ist, ist der unterste Speicher 31 mit dem darüber liegenden Speicher 32 (genauer dessen unterem Bereich 321) über eine Leitung 4 verbunden. Es bietet sich ferner an, dass wenigstens der unterste Speicher 31 direkt mit dem obersten Speicher 33 oder mehreren darüber liegenden Speichern oder Speicherbereichen verbunden ist. Zur Vermeidung unnötiger Kosten (bspw. für zusätzliche Pumpvorrichtung) ist es denkbar, dass einzelne Leitungen 4 über Verbindungsleitungsabschnitte 4` miteinander verbunden sind. Figur 3 zeigt hierzu beispielhaft, dass eine den untersten Speicher 31 mit dem unteren Bereich 321 des mittleren Speichers 32 verbindende Leitung über einen Verbindungsleitungsabschnitt 4` mit einer den oberen Bereich 322 des mittleren Speichers mit dem obersten Speicher 33 verbindenden Leitung 4 verbunden ist. In den Verbindungsstellen der Leitungen 4, 4` sind vorzugsweise jeweils Ventile 38 vorgesehen. Mittels dieser Ventile 38 kann der Flüssigkeitsstrom wahlweise reguliert und die Fließrichtung wahlweise bestimmt werden, so dass eine Vermengung von kontaminierter und nichtkontaminierter Flüssigkeit vermieden wird. Derartige Verbindungsleitungsabschnitte 4` können beliebig zwischen allen Leitungen 4, 26, 37 vorgesehen werden.

Figur 4 zeigt eine dritte nicht erfindungsgemäße Ausführungsform eines unterirdischen Flüssigkeitsmanagementsystems 40. Mit Bezug zu den vorgenannten Ausführungsbeispielen sind gleiche Merkmale mit denselben Bezugszeichen versehen. Bezüglich aller entsprechenden Merkmale wird vollumfänglich auf obige Ausführungen verwiesen. Es ist ferner festzuhalten, dass eine beliebige Kombination der Merkmale und Ausgestaltungsformen der Ausführungsbeispiele untereinander im Rahmen der Erfindung möglich sind.

Das unterirdische Flüssigkeitsmanagementsystem 40 gemäß Figur 4 entspricht im Wesentlichen dem der Figur 2. In Figur 4 ist ein Speicher 41 in der kontaminierten Schicht angeordnet, während die beiden darüber liegenden Speicher 42, 43 in einer nichtkontaminierten Schicht vorgesehen sind.

Der wesentliche Unterschied des unterirdischen Flüssigkeitsmanagementsystems 40 der dritten nicht erfindungsgemäßen Ausführungsform besteht in der Ausgestaltung der Reinigungsstufe. Zusätzlich oder alternativ zu den vorbeschriebenen Filtervorrichtungen 25 und Reinigungsvorrichtungen, die der Einfachheit halber in Figur 4 nicht dargestellt sind, kann der Speicher zumindest teilweise mit porösem Material gefüllt sein, welches dann die Filtervorrichtung 44 zum Abbau von Kontaminierungen in der Flüssigkeit (bspw. Oberflächenwasser oder Grundwasser) oder der kontaminierten Schicht an sich (bspw. über die Flüssigkeit) bildet. Eine derartige Filtervorrichtung ist in vergleichbarer Weise auch in der EP 2 058 441 A1 beschrieben. Dies soll im Folgenden beispielhaft dargestellt werden.

In Figur 4 ist der sich in der kontaminierten Schicht K befindliche Speicher 41 zumindest teilweise mit einem porösen Material 45 befüllt. Unter "zumindest teilweise" ist im Rahmen der vorliegenden Erfindung zu verstehen, dass der Speicher mit wenigstens so viel porösem Material zu befüllen ist, wie notwendig ist, um eine ausreichend gute Speicherung und Reinigung der Flüssigkeit zu erreichen.

Vorzugsweise handelt es sich bei dem porösen Material 45 um Schotter, Kies, Sand (z.B. Quarzsand) oder um eine Mischung daraus. Es kann aber auch Lehm, Schlick und/oder Ton verwendet werden. Ebenso können Geotextilien verwendet werden. Auch andere Materialien, wie beispielsweise Kunststoffe, können zum Einsatz kommen, wenn sie aufgrund ihrer Porosität, dem Verhältnis des Volumens all ihrer Hohlräume zu ihrem äußeren Volumen, in der Lage sind, Wasser zu speichern und zu transportieren.

Die Filtervorrichtung 44 umfasst wenigstens eine Barrierenschicht 46 oder mehrere Barrierenschichten 46 (Figur 4), welche innerhalb des Speichers 41 angeordnet ist bzw. sind. Die Barrierenschicht 46 ist außerdem mit mindestens einem Durchlass 47 für Flüssigkeiten versehen.

Abgesehen von dem Durchlass 47, der wasserdurchlässig ist, ist die Barrierenschicht 46 aus einem Material gefertigt, welches im Wesentlichen wasserundurchlässig ist. Unter "im Wesentlichen wasserundurchlässig" wird im Rahmen der vorliegenden Erfindung verstanden, dass die Barrierenschicht 46 derart ausgebildet ist, dass der Hauptteil des Wassers, welcher durch den Speicher 41 sickert, daran gehindert wird, durch die Barrierenschicht 46 hindurch in den Bereich oberhalb bzw. unterhalb der Barrierenschicht 46 zu gelangen.

Die Barrierenschicht 46 dient zur Verlängerung des Sickerwegs (siehe Pfeile in Figur 4) der zu reinigenden Flüssigkeit durch das poröse Material 45 des Speichers 41. Durch die Verlängerung des Sickerwegs kann die Flüssigkeit länger innerhalb des Speichers 41 gespeichert werden. Außerdem wird die Flüssigkeit über einen längeren Zeitraum gefiltert, was zu einem verbesserten Abbau der Kontaminierung führt und wodurch sich folglich die Qualität der gereinigten Flüssigkeit verbessert.

Erreicht die Flüssigkeit die Barrierenschicht 46, so beginnt sie sich durch nachsickernde Flüssigkeit zu stauen. In diesem gestauten Zustand dringt sie in die Kapillaren des porösen Materials 46 ein. Dies führt dazu, dass sich in dem Bereich unmittelbar vor der Barrierenschicht 46 Dreck- und Schmutzteilchen in und an den Poren besonders gut ablagern bzw. absetzen.

Vorzugsweise ist die Barrierenschicht 46 horizontal angeordnet, da bei horizontaler Anordnung der Sickerweg der Flüssigkeit durch die Filtervorrichtung 44 am Längsten ist, was sich besonders positiv auf die Qualität des aufgereinigten Wassers auswirkt. Es ist aber auch jede andere Neigung der Barrierenschicht 46 möglich, wenn die Eigenschaft der Barrierenschicht 46, den Sickerweg der Flüssigkeit zu verlängern, dadurch nicht verloren geht. Die einzelnen Barrierenschichten 46 innerhalb eines Systems können jeweils den gleichen Neigungsgrad aufweisen sich aber auch hinsichtlich ihres Neigungsgrads untereinander unterscheiden.

Der Durchlass 47 nimmt, relativ zur gesamten Barrierenschicht 46, nur einen kleinen Flächenbereich ein. Vorzugsweise handelt es sich hierbei um einen Flächenbereich von 5 bis 20% bezogen auf die Gesamtfläche der Barrierenschicht 46.

Vorzugsweise ist der Durchlass 47 im äußeren Bereich der Barrierenschicht 46 angeordnet, so dass der Weg, den die Flüssigkeit entlang der Barrierenschicht 46 zurückgelegt hat, in etwa dem maximal möglichen entspricht, was zu einem besonders guten Aufreinigungsergebnis führt.

Bevorzugt sind, bei wenigstens zwei Barrierenschichten 46 wie in Figur 4 gezeigt, die Durchlässe 47 von jeweils zwei benachbarten Barrierenschichten 46 gegeneinander versetzt, besonders vorzugsweise entgegengesetzt zueinander angeordnet, so dass der Sickerweg der Flüssigkeit maximal ausgestaltet ist.

Die Filtervorrichtung umfasst ferner einen Auffangbehälter 48, der sich von der Sohle des Speichers 41 in im Wesentlichen vertikaler Richtung nach oben erstreckt, vorzugsweise bis zur Decke oder bis kurz vor die Decke des Speichers 41. Es ist auch denkbar, dass sich der Auffangbehälter in Form eines Brunnens bis zur (Erd-)Oberfläche O erstreckt.

Der Auffangbehälter 48 weist wenigstens unterhalb der untersten Barrierenschicht 46 mindestens eine Öffnung 49 auf, durch die die gereinigte Flüssigkeit fließen bzw. sickern kann. Die gereinigte Flüssigkeit kann dann in dem Auffangbehälter 48 gespeichert und bereitgestellt werden; entweder zur Entnahme, zur weiteren Reinigung und/oder zur Energiegewinnung.

Um die Flüssigkeit aus dem Auffangbehälter 48 zu entnehmen, gibt es unterschiedliche Möglichkeiten, von denen im Folgenden die zwei bevorzugten beschrieben werden.

Gemäß einer ersten Möglichkeit weist die Filtervorrichtung 44 vorzugsweise eine Pumpvorrichtung P innerhalb des Auffangbehälters auf. Diese ist vorzugsweise an der Sohle des Speichers 41 angeordnet. Von dieser Pumpvorrichtung P erstreckt sich eine Leitung 4 nach oben durch den Auffangbehälter 48 und mündet in einem Auslass 50, so dass die nach oben beförderte Flüssigkeit für eine erneute Reinigung oberhalb der obersten Barrierenschicht 46 in den Speicher 41 bzw. die Filtervorrichtung 44 eingeleitet werden kann.

Wie in Figur 4 gezeigt ist es ferner denkbar, dass sich die aus dem Auffangbehälter 48 erstreckende Leitung 4 durch alle Speicher 41, 42, 43 und ggf. bis oberhalb der (Erd-)Oberfläche erstreckt, um die Flüssigkeit, vorzugsweise nach einer durchgeführten Reinigung, auch in den darüber angeordneten Speichern 42, 43 oder der Umgebung bereitzustellen. Hierfür weist die Leitung 4 an dafür notwendigen Stellen in den Speichern 41, 42, 43 Ventile 38 auf, von denen Ausgabeleitungsabschnitte 4 '' abzweigen. Mittels dieser Ventile 38 kann der Flüssigkeitsstrom wahlweise reguliert und die Fließrichtung wahlweise bestimmt werden, so dass eine Vermengung von kontaminierter und nichtkontaminierter Flüssigkeit vermieden wird. Ist die Reinigung abgeschlossen, kann das Ventil 38 im Speicher 41 zum entsprechenden Ausgabeleitungsabschnitte 4'' geschlossen werden, so dass die Flüssigkeit dann über die nach oben geöffnete Leitung 4 wahlweise in die mittels dieser Leitung 4 verbundenen Speicher 42, 43 oder in die Umgebung geleitet wird.

Es sei angemerkt, dass alle vorbeschriebenen Leitungen 4 entsprechend der in Figur 4 gezeigten Leitung 4, die sich über alle Speicher und ggf. bis zur (Erd-)Oberfläche O erstreckt und mit entsprechenden Ventilen 38 und Ausgabeleitungsabschnitte 4 '' versehen ist, ausgebildet sein können. Auf diese einfache Weise können Leitungen 4, 26, 37 eingespart werden, da zum Verbinden mehrerer Speicher nur noch eine geringe Anzahl an Leitungen 4 vorgesehen werden muss. Es ist auch denkbar, dass über das in Figur 4 gezeigte Ausführungsbeispiel hinaus in der sich über alle Speicher 41, 42, 43 erstreckenden Leitung 4 innerhalb jedes Speichers 41, 42, 43 eine Pumpe vorgesehen ist, so dass lediglich eine einzige Leitung 4 für den Betrieb eines Flüssigkeitsmanagementsystems 1, 20, 30, 40 notwendig ist.

Gemäß einer zweiten Möglichkeit zur Entnahme der Flüssigkeit aus dem Auffangbehälter 48 kann der Auffangbehälter 48 derart angeordnet sein, dass er oberhalb einer Verbindung, bspw. eines Schachtes 5, die bzw. der zu einem darunter liegenden Speicher (nicht dargestellt) führt, angeordnet ist, wobei der Auffangbehälter 48 den Schacht 5 vorzugsweise (im Wesentlichen ganz) umgibt. Der Schacht 5 kann, wie zuvor bereits beschrieben, mittels eines Sperrventils 10 verschlossen sein und wahlweise, bspw. bei gefülltem Auffangbehälter 48, geöffnet werden. Die Flüssigkeit kann dann über das Sperrventil 10 und den Schacht 5 in den darunter angeordneten Speicher geleitet werden. Vorzugsweise ist in dem Schacht 5 ebenfalls eine bereits zuvor beschrieben Turbine 8 mit Generator 9 entsprechend angeordnet.

Der unter dem Speicher 41 angeordnete Speicher kann ebenfalls mit einer Filtervorrichtung 44, wie sie in dem untersten Speicher 41 der Figur 4 gezeigt ist, ausgestattet sein, so dass die Reinigungsleistung verbessert ist.

Im Rahmen der Erfindung ist es bei mit radioaktiven Stoffen verunreinigten Flüssigkeiten besonders vorteilhaft, wenn die Speicher (31, 32, 33) bzw. Minen (M) in Tongesteinen vorgesehen sind, wie sie bspw. in der Opalinuston-Formation im Jura vorliegen. Dies ist insbesondere bei urankontaminierten Minen von besonderem Vorteil. Die in dem Ton enthaltenen Tonminerale (bspw. Kaolinit) dienen dabei der Bindung der radioaktiven Stoffe, die somit aus der Flüssigkeit gereinigt werden können. Im Zusammenspiel mit den im Tongestein enthaltenen Eisenmineralien, die eine Reduktion der radioaktiven Stoffe und somit das Festsetzen derselben im Tongestein bewirken, kann die Reinigung von Flüssigkeiten in dem unterirdischen Flüssigkeitsmanagementsystem (30) noch gesteigert werden.

Es ist zusätzlich oder alternativ möglich, dass die Wände der Speicher (31, 32, 33) bzw. Minen (M) mit natürlichem Ton (insbesondere enthaltend Tonminerale) zu Reinigungszwecken der Flüssigkeit versehen werden. Dazu kann eine Tonschicht auf die Innenwände der Speicher (31, 32, 33) aufgebracht werden, insbesondere wenn die Mine (M) nicht in Tongestein vorgesehen ist. Die Tonschicht kann, hat diese ausreichend radioaktive Stoffe gebunden bzw. ist diese mit radioaktiven Stoffen gesättigt, abgetragen und umweltgerecht entsorgt bzw. gelagert oder aufbereitet werden. Ist die Mine (M) in Tongestein vorgesehen, so kann bspw. die äußerste Tonschicht der Innenwände der Speicher (31, 32, 33) in regelmäßigen Abständen abgetragen und entsprechend entsorgt oder aufbereitet werden, um die stark kontaminierten Tonschichten zu entfernen und die Reinigung mit einer "frischen" Tonschicht fortzuführen.

Ferner ist es denkbar, dass mittels des Einsatzes von Ton absorbierende Trennwände oder Trennschichten (aus Ton oder Tongestein) in dem unterirdischen Flüssigkeitsmanagementsystem (1, 20, 30, 40) vorgesehen werden. Hierzu werden die aus Ton(gestein) gebildeten Trennwände oder Trennschichten vorzugsweise an Stellen in der Mine (M) in oder zwischen den Speicher (2, 3, 21, 22, 23, 24, 31, 32, 33, 41, 42, 43) oder auch separat, also bspw. außerhalb der Mine (M), dort vorgesehen, wo (kontaminierte) Flüssigkeit anliegt bzw. hindurchfließt; auf natürliche oder künstliche Weise.

Auf die Ausführungsbeispiele bezogen bedeutet das, dass bspw. in den Verbindungsschächten 5, 27, den Filtervorrichtungen 25, den Leitungen 4, 26, 37, der Barriere 35, dem Durchgang 36 oder an sonstigen geeigneten Stellen der Mine (M) Trennwände oder Trennschichten aus Ton vorgesehen sein können. Beispielsweise kann auch die Barriere 35 oder die Filtervorrichtung 25 an sich aus einem entsprechenden Ton gebildet sein. Ebenso ist es denkbar, zusätzliche Barriereschichten aus Ton als Trennwände und Reinigungsvorrichtung, insbesondere für mit radioaktiven Stoffen verunreinigte Flüssigkeiten, vorzusehen.

Es ist überdies denkbar, Ton als Filterelement, bspw. als lose Tonpartikel, in der Mine (M) vorzusehen, so dass dieser mit der kontaminierten Flüssigkeit in Verbindung kommt und die darin enthaltenen radioaktiven Stoffe binden kann. Mit anderen Worten muss der Ton nicht als Schicht oder Wand vorliegen, sondern kann in jeglicher Form vorgesehen werden, bspw. "fest" (als Tonplatten oder Tonklumpen), "fest angeordnet" (als Trennschicht oder Trennwand), "lose geordnet" (als Filterpartikel in einem (begrenzten) Filtergehäuse) oder "lose willkürlich" (bspw. aufgeschlämmt in der kontaminierten Flüssigkeit). Vorzugsweise ist der Ton bzw. das Tongestein so vorgesehen, dass es wahlweise ausgewechselt oder abgetragen werden kann, wenn eine vorbestimmte Menge an kontaminierten (radioaktiven) Stoffen darin gebunden ist. Auf diese Weise wird eine effektive Reinigungsvorrichtung für insbesondere radioaktiv kontaminierte Flüssigkeiten bereitgestellt.

Im Folgenden wird ein Verfahren zum Betrieb eines Flüssigkeitsmanagementsystems 1, 20, 30, 40 beschrieben.

Die Erfindung umfasst ferner ein Verfahren zum Betrieb eines Flüssigkeitsmanagementsystems 30 für Minen M gemäß Anspruch 19, aufweisend den folgenden Schritt: Pumpen einer Flüssigkeit von wenigstens einem ersten Speicher 31, 32 welcher durch einen Hohlraum der Mine M gebildet ist, in wenigstens einen zweiten Speicher 32, 33, dessen Sohle oberhalb derer des ersten Speichers 31, 32 angeordnet ist, über wenigstens eine die Speicher 31, 32, 33 verbindende Leitung 4 zum Durchleiten der Flüssigkeit, wobei die Flüssigkeit mittels wenigstens einer Pumpenvorrichtung P durch die Leitungen 4 von dem ersten Speicher 31, 32 in den zweiten Speicher 33 befördert wird, und wobei die Pumpenvorrichtung P mittels einer Geothermieeinrichtung des Flüssigkeitsmanagementsystems 30 angetrieben wird.

Ferner kann das Verfahren den Schritt aufweisen: Reinigen der Flüssigkeit mittels einer Filtervorrichtung 25 einer Reinigungsstufe, wobei entweder die Filtervorrichtung 25 mit der Pumpvorrichtung P derart strömungstechnisch verbunden oder in einem die Speicher 31, 32, 33 verbindenden Durchgang 5 derart strömungstechnisch angeordnet ist, dass die Flüssigkeit beim Pumpprozess oder beim Durchleiten durch den Durchgang 5 gereinigt wird, oder wobei die Filtervorrichtung aus einem den Speicher zumindest teilweise auffüllendem porösen Material gebildet ist, und die Flüssigkeit bei Durchleitung durch das poröse Material gereinigt wird.

Des Weiteren kann zwischen dem ersten Speicher 31, 32 und dem zweiten Speicher 32, 33 ein Durchgang 5 vorgesehen sein, wobei das erfindungsgemäße Verfahren dann ferner die folgenden Schritte aufweisen kann: Ablassen der Flüssigkeit von dem zweiten Speicher 32, 33 in den ersten Speicher 31, 32 über ein wahlweises Öffnen eines im Durchgang 5 vorgesehenen Sperrventils 10, und Energiegewinnung durch Antreiben einer Energiegewinnungsvorrichtung 8 mittels der über den Durchgang 5 abgelassenen Flüssigkeit, wobei die Energiegewinnungsvorrichtung 8 in dem Durchgang 5 stromab des Sperrventils 10 angeordnet ist.

Die Erfindung ist nicht auf das zuvor beschriebenen Ausführungsbeispiel beschränkt. Vielmehr können die beschriebenen Merkmale beliebig miteinander kombiniert werden.

Die Erfindung ist auch nicht auf eine Anzahl an Speichern und auch nicht auf die Anzahl und Art der Ausgestaltung der Verbindung zwischen den Speichern beschränkt. So können beispielsweise jeweils zwei oder mehrere Speicher mittels Schächten und/oder Leitungen sowie entsprechender Pumpvorrichtungen, Turbinen und Sperrventile miteinander verbunden sein. Die Speicher müssen auch nicht direkt übereinander angeordnet sein, sondern können auch in der horizontalen zueinander versetzt und/oder in der vertikalen überlappend angeordnet sein, solange eine vorbeschrieben fluidtechnische Verbindung zwischen wenigstens einem Teil der Speicher möglich ist. Ferner können in jedem beliebigen Speicher beliebige und beliebig viele Reinigungsstufen (Filtervorrichtung; Reinigungsvorrichtung) vorgesehen werden. Ebenso kann neben der Geothermie jede beliebige Energiequelle für den Betrieb des Systems vorgesehen werden. Die Geothermie kann zudem immer sowohl indirekt (Stromgewinnung; Kältegewinnung) als auch direkt (Wärmegewinnung) genutzt werden.

## Patentansprüche

1. Unterirdisches Flüssigkeitsmanagementsystem ( 30, ) für Minen (M) zur Energiegewinnung, Energiespeicherung, Speicherung und Reinigung von in der Mine (M) befindlichen Flüssigkeiten, aufweisend:
wenigstens einen erster Speicher ( 31, 32), welcher durch einen Hohlraum der Mine (M) gebildet ist,
wenigstens einen zweiten Speicher ( 32, 33), dessen Sohle oberhalb derer des ersten Speichers ( 31, 32) angeordnet ist,
wenigstens eine die Speicher ( 31, 32, 33) verbindende Leitung (4) zum Durchleiten der Flüssigkeit, und
wenigstens eine Pumpenvorrichtung (P) zum Befördern der Flüssigkeit durch die Leitungen (4) von dem ersten Speicher ( 31, 32) in den zweiten Speicher ( 32, 33),
**dadurch gekennzeichnet, dass**
das System ferner aufweist:
eine Geothermieeinrichtung wenigstens zum Betreiben der Pumpe (P), wobei
sich wenigstens ein Speicher (32) derart erstreckt, dass er von einer nichtkontaminierte Schicht (N) in eine kontaminierte Schicht (K) hineinragt, und
eine künstliche Barriere (35) in dem sich über die Schichten erstreckenden Speicher (32) vorgesehen ist, die sich vorzugsweise entlang einer die kontaminierte Schicht (K) von der nichtkontaminierten Schicht (N) trennenden Aquifuge erstreckt, wobei die künstliche Barriere (35) den sich über die Schichten erstreckenden Speicher (32) in einen unteren Bereich (321) und einen oberen Bereich (322) trennt.

2. Unterirdisches Flüssigkeitsmanagementsystem ( 30 ) nach Anspruch 1, wobei alle Speicher ( 31, 32, 33) durch Hohlräume der Mine (M) gebildet sind.

3. Unterirdisches Flüssigkeitsmanagementsystem ( 30 ) nach Anspruch 1 oder 2, wobei zwischen oder in den Speichern ( 31, 32, 33 ) Reinigungsstufen vorgesehen sind.

4. Unterirdisches Flüssigkeitsmanagementsystem ( 30 ) nach Anspruch 3, wobei die Reinigungsstufe wenigstens eine Filtervorrichtung (25) zum Reinigen der Flüssigkeit aufweist.

5. Unterirdisches Flüssigkeitsmanagementsystem ( 30 ) nach Anspruch 4, wobei die Filtervorrichtung (25) mit der Pumpvorrichtung (P) derart strömungstechnisch verbunden ist, dass die Flüssigkeit bei einem Pumpprozess der Pumpvorrichtung (P) gereinigt wird.

6. Unterirdisches Flüssigkeitsmanagementsystem nach Anspruch 4 oder 5, wobei der Speicher zumindest teilweise mit porösem Material gefüllt ist, welches die Filtervorrichtung bildet.

7. Unterirdisches Flüssigkeitsmanagementsystem nach Anspruch 6, wobei die Filtervorrichtung ferner aufweist:
mindestens eine horizontal ausgerichtete Barrierenschicht zur Verlängerung des Sickerwegs der Flüssigkeit, wobei die Barrierenschicht mit mindestens einem Durchlass für die Flüssigkeit versehen ist, und sich oberhalb und unterhalb der Barrierenschicht poröses Material befindet; und
einen Auffangbehälter zum Sammeln von gereinigter Flüssigkeit, der sich von der Sohle des Speichers in vertikaler Richtung nach oben erstreckt,
wobei der Auffangbehälter unterhalb der untersten Barrierenschicht mindestens eine Öffnung aufweist, durch die die Flüssigkeit fließen bzw. sickern kann.

8. Unterirdisches Flüssigkeitsmanagementsystem nach Anspruch 7, wobei die Pumpvorrichtung in dem Auffangbehälter angeordnet ist, und sich eine Leitung (4) in vertikaler Richtung nach oben aus dem Auffangbehälter heraus in den Speicher erstreckt, vorzugsweise auch ferner aus dem Speicher selbst heraus.

9. Unterirdisches Flüssigkeitsmanagementsystem nach Anspruch 7 oder 8, wobei der Auffangbehälter derart angeordnet ist, dass er oberhalb einer Verbindungsöffnung, die zu einem darunter liegenden Speicher führt, angeordnet ist, wobei der Auffangbehälter die Verbindungsöffnung umgibt.

10. Unterirdisches Flüssigkeitsmanagementsystem ( 30 ) nach einem der Ansprüche 3 bis 9, wobei die Reinigungsstufe wenigstens eine Reinigungsvorrichtung zum Anheben oder Absenken des pH-Wertes der Flüssigkeit aufweist.

11. Unterirdisches Flüssigkeitsmanagementsystem ( 30 ) nach Anspruch 10, wobei die Reinigungsvorrichtung wenigstens eine Kalkschicht aufweist, durch die oder entlang der die Flüssigkeit zur pH-Wert-Veränderung geleitet wird.

12. Unterirdisches Flüssigkeitsmanagementsystem ( 30 ) nach einem der vorhergehenden Ansprüche, wobei sich die Leitungen (4) in vertikaler Richtung nach oben aus dem Speicher ( 31, 32, 33 ) heraus in einen darüber angeordneten Speicher ( 32, 33) oder aus der Mine (M) heraus erstrecken.

13. Unterirdisches Flüssigkeitsmanagementsystem ( 30 ) nach einem der vorhergehenden Ansprüche, wobei die Geothermieeinrichtung eine primäre Energiequelle ist, und das System ferner wenigstens eine weitere Energiequelle aufweist.

14. Unterirdisches Flüssigkeitsmanagementsystem ( 30 ) nach Anspruch 13, wobei die weitere Energiequelle eine Windkraftanlage, eine Solaranlage oder ein Pumpspeicherwerk aufweist.

15. Unterirdisches Flüssigkeitsmanagementsystem ( 30 ) nach einem der vorhergehenden Ansprüche, wobei ein Speicher ( 31, 32, 33 ) als Flüssigkeitsvorrat ausgebildet ist, in dem Flüssigkeit gesammelt und bereitgestellt wird.

16. Unterirdisches Flüssigkeitsmanagementsystem ( 30 ) nach einem der vorhergehenden Ansprüche, wobei die Flüssigkeit Wasser, vorzugsweise Grundwasser oder Oberflächenwasser oder künstlich in die Mine (M) geleitetes Wasser ist.

17. Unterirdisches Flüssigkeitsmanagementsystem ( 30 ) nach einem der vorhergehenden Ansprüche, wobei Trennwände oder Trennschichten aus Ton oder Tongestein in dem unterirdischen Flüssigkeitsmanagementsystem ( 30) dort vorgesehen sind, wo kontaminierte Flüssigkeiten anliegen bzw. hindurchfließen, um insbesondere mit radioaktiven Stoffen kontaminierte Flüssigkeiten zu reinigen.

18. Wasserwerk (W) zur Bereitstellung von Trink- und Brauchwasser, aufweisend ein unterirdisches Flüssigkeitsmanagementsystem ( 30) nach Anspruch 14 als Wassermanagementsystem, ferner aufweisend ein Ausgabesystem (S) zum Bereitstellen des Wassers aus dem Wassermanagementsystem.

19. Verfahren zum Betrieb eines Flüssigkeitsmanagementsystems ( 30) für Minen (M), aufweisend den folgenden Schritt:
Pumpen einer Flüssigkeit von wenigstens einem ersten Speicher ( 31, 32), welcher durch einen Hohlraum der Mine (M) gebildet ist, in wenigstens einen zweiten Speicher ( 33), dessen Sohle oberhalb derer des ersten Speichers ( 31, 32) angeordnet ist, über wenigstens eine die Speicher ( 31, 32, 33) verbindende Leitung (4) zum Durchleiten der Flüssigkeit,
wobei die Flüssigkeit mittels wenigstens einer Pumpenvorrichtung (P) durch die Leitungen (4) von dem ersten Speicher ( 31, 32) in den zweiten Speicher ( 32, 33) befördert wird, und wobei sich wenigstens ein Speicher (32) derart erstreckt, dass er von einer nichtkontaminierte Schicht (N) in eine kontaminierte Schicht (K) hineinragt, wobei das Verfahren folgende Schritte umfasst :
Antreiben der Pumpenvorrichtung (P) mittels einer Geothermieeinrichtung des Flüssigkeitsmanagementsystems ( 30), und
Vorsehen einer künstliche Barriere (35) in dem sich über die Schichten erstreckenden Speicher (32), wobei sich die künstliche Barriere (35) entlang einer die kontaminierte Schicht (K) von der nichtkontaminierten Schicht (N) trennenden Aquifuge erstreckt, und wobei die künstliche Barriere (35) den sich über die Schichten erstreckenden Speicher (32) in einen unteren Bereich (321) und einen oberen Bereich (322) trennt.

20. Verfahren nach Anspruch 19, ferner aufweisend den Schritt:
Reinigen der Flüssigkeit mittels einer Filtervorrichtung (25) einer Reinigungsstufe,
wobei entweder die Filtervorrichtung (25) mit der Pumpvorrichtung (P) derart strömungstechnisch verbunden oder in einem die Speicher (31, 32, 33) verbindenden Durchgang (5) derart strömungstechnisch angeordnet ist, dass die Flüssigkeit beim Pumpprozess oder beim Durchleiten durch den Durchgang (5) gereinigt wird, oder
wobei die Filtervorrichtung aus einem den Speicher zumindest teilweise auffüllendem porösen Material gebildet ist, und die Flüssigkeit bei Durchleitung durch das poröse Material gereinigt wird.

21. Verfahren nach Anspruch 19 oder 20, wobei zwischen dem ersten Speicher ( 31, 32) und dem zweiten Speicher ( 32, 33) ein Durchgang (5) vorgesehen ist, wobei das Verfahren ferner die folgenden Schritte aufweist:
Ablassen der Flüssigkeit von dem zweiten Speicher ( 32, 33) in den ersten Speicher ( 31, 32) über ein wahlweises Öffnen eines im Durchgang (5) vorgesehenen Sperrventils (10), und
Energiegewinnung durch Antreiben einer Energiegewinnungsvorrichtung (8) mittels der über den Durchgang (5) abgelassenen Flüssigkeit, wobei die Energiegewinnungsvorrichtung (8) in dem Durchgang (5) stromab des Sperrventils (10) angeordnet ist.

22. Verfahren nach einem der Ansprüche 19 bis 21, ferner aufweisend den Schritt:
Anheben oder Absenken des pH-Wertes der Flüssigkeit, wobei die Flüssigkeit durch eine in oder zwischen den Speichern ( 31, 32, 33 ) angeordnete Reinigungsvorrichtung, vorzugsweise aufweisend wenigstens eine Kalkschicht, durchgeleitet wird.

## Claims

1. Subterranean liquid management system (30) for mines (M) for energy recovery, energy storage, storage and purification of liquids contained in the mine (M), comprising:
at least one first reservoir (31, 32) which is formed by a cavity in the mine (M),
at least one second reservoir (32, 33), the bed of which is located above that of the first reservoir (31, 32),
at least one pipe (4) connecting the reservoirs (31, 32, 33) for conveying the liquid, and
at least one pumping apparatus (P) for conveying the liquid through the pipes (4) from the first reservoir (31, 32) into the second reservoir (32, 33),
**characterised in that**
the system further comprises:
a geothermal device at least for operating the pump (P), while
at least one reservoir (32) runs in such a way that it extends from a non-contaminated stratum (N) into a contaminated stratum (K), and
an artificial barrier (35) is provided in the reservoir (32) extending across the strata, said barrier (35) preferably extending along an aquifuge that separates the contaminated stratum (K) from the non-contaminated stratum (N), the artificial barrier (35) dividing the reservoir (32) that extends across the strata into a lower region (321) and an upper region (322).

2. Subterranean liquid management system (30) according to claim 1, wherein all the reservoirs (31, 32, 33) are formed by cavities in the mine (M).

3. Subterranean liquid management system (30) according to claim 1 or 2, wherein purification stages are provided between or in the reservoirs (31, 32, 33).

4. Subterranean liquid management system (30) according to claim 3, wherein the purification stage comprises at least one filter apparatus (25) for purifying the liquid.

5. Subterranean liquid management system (30) according to claim 4, wherein the filter apparatus (25) is fluidically connected to the pumping apparatus (P), such that the liquid is purified during a pumping process of the pumping apparatus (P).

6. Subterranean liquid management system according to claim 4 or 5, wherein the reservoir is at least partly filled with porous material that forms the filter apparatus.

7. Subterranean liquid management system according to claim 6, wherein the filter apparatus further comprises:
- at least one horizontally aligned barrier layer for extending the seepage path of the liquid, the barrier layer being provided with at least one passage for the liquid, and porous material being located above and below the barrier layer; and
- a catchment tank for collecting purified liquid, which extends vertically upwards from the bed of the reservoir,
the catchment tank comprising, underneath the bottom-most barrier layer, at least one opening through which the liquid can flow or seep.

8. Subterranean liquid management system according to claim 7, wherein the pumping apparatus is arranged in the catchment tank and a pipe (4) extends vertically upwards out of the catchment tank into the reservoir, preferably also out of the reservoir itself.

9. Subterranean liquid management system according to claim 7 or 8, wherein the catchment tank is arranged such that it is located above a connecting opening that leads to an underlying reservoir, the catchment tank surrounding the connecting opening.

10. Subterranean liquid management system (30) according to one of claims 3 to 9, wherein the purification stage comprises at least one purification apparatus for raising or lowering the pH of the liquid.

11. Subterranean liquid management system (30) according to claim 10, wherein the purification apparatus comprises at least one layer of lime through which or along which the liquid is passed in order to change its pH.

12. Subterranean liquid management system (30) according to one of the preceding claims, wherein the pipes (4) extend vertically upwards from the reservoir (31, 32, 33) into a reservoir (32, 33) located above them, or out of the mine (M).

13. Subterranean liquid management system (30) according to one of the preceding claims, wherein the geothermal device is a primary energy source, and the system further comprises at least one additional energy source.

14. Subterranean liquid management system (30) according to claim 13, wherein the additional energy source is a wind power plant, a solar power plant or a pumped storage plant.

15. Subterranean liquid management system (30) according to one of the preceding claims, wherein a reservoir (31, 32, 33) is embodied as a liquid store in which liquid is collected and stored.

16. Subterranean liquid management system (30) according to one of the preceding claims, wherein the liquid is water, preferably ground water or surface water or water that has been artificially piped into the mine (M).

17. Subterranean liquid management system (30) according to one of the preceding claims, wherein partition walls or partition layers of clay or argillaceous rock are provided in the subterranean liquid management system (30) at hose places where contaminated liquids are present or flow through, in order to purify, in particular, liquids contaminated with radioactive substances.

18. Waterworks (W) for providing drinking and tap water, comprising a subterranean liquid management system (30) according to claim 14 as a water management system, further comprising a delivery system (S) for supplying the water from the water management system.

19. Method for operating a liquid management system (30) for mines (M), comprising the following step:
pumping a liquid from at least one first reservoir (31, 32) which is formed by a cavity in the mine (M), into at least one second reservoir (32, 33), the bed of which is located above that of the first reservoir (31, 32), through at least one pipe (4) connecting the reservoirs (31, 32, 33) for conveying the liquid,
the liquid being conveyed by means of at least one pumping apparatus (P) through the pipes (4) from the first reservoir (31, 32) into the second reservoir (32, 33), and at least one reservoir (32) being situated such that it extends from a non-contaminated stratum (N) into a contaminated stratum (K), the method comprising the following steps:
driving the pumping apparatus (P) by means of a geothermal device of the liquid management system (30), and
providing an artificial barrier (35) in the reservoir (32) that extends across the strata, the artificial barrier (35) extending along an aquifuge that separates the contaminated stratum (K) from the non-contaminated stratum (N), and the artificial barrier (35) dividing the reservoir (32) that extends across the strata into a lower region (321) and an upper region (322).

20. Method according to claim 19, further comprising the step of:
purifying the liquid by means of a filter apparatus (25) of a purification stage,
wherein either the filter apparatus (25) is fluidically connected to the pumping apparatus (P) or is fluidically arranged in a passage (5) that connects the reservoirs (31, 32, 33), such that the liquid is purified during the pumping process or as it is conveyed through the passage (5), or
wherein the filter apparatus is formed from a porous material that at least partly fills the reservoir, and the liquid is purified as it is conveyed through the porous material.

21. Method according to claim 19 or 20, wherein a passage (5) is provided between the first reservoir (31, 32) and the second reservoir (32, 33), the method further comprising the following steps:
releasing the liquid from the second reservoir (32, 33) into the first reservoir (31, 32) by selectively opening a stop valve (10) provided in the passage (5), and
recovering energy by driving an energy recovery apparatus by means of the liquid released through the passage (5), the energy recovery apparatus (8) being disposed in the passage (5) downstream of the stop valve (10).

22. Method according to one of claims 19 to 21, further comprising the step of:
raising or lowering the pH of the liquid, the liquid being passed through a purification apparatus, preferably comprising at least one layer of lime, which is arranged in or between the reservoirs (31, 32, 33),

## Revendications

1. Système de gestion de liquides souterrains (30) destiné à des mines (M) en vue de générer d'énergie, stocker de l'énergie, stocker et nettoyer des liquides se trouvant dans la mine (M), ledit système comportant :
au moins un premier réservoir (31, 32) qui est formé par une cavité de la mine (M),
au moins un second réservoir (32, 33) dont le fond est situé au-dessus de celui du premier réservoir (31, 32),
au moins une conduite (4) reliant les réservoirs (31, 32, 33) et destiné à acheminer le liquide, et
au moins un dispositif de pompage (P) destiné à transporter le liquide à travers les conduites (4) du premier réservoir (31, 32) dans le second réservoir (32, 33),
**caractérisé en ce que**
le système comporte en outre :
une installation géothermique destinée au moins à faire fonctionner la pompe (P),
au moins un réservoir (32) s'étendant de telle sorte qu'il s'étend depuis une couche non contaminée (N) dans une couche contaminée (K), et
une barrière artificielle (35) étant prévue dans le réservoir (32) s'étendant sur les couches, laquelle barrière s'étend de préférence le long d'un aquiclude séparant la couche contaminée (K) de la couche non contaminée (N), la barrière artificielle (35) divisant le réservoir (32) s'étendant sur les couches en une région inférieure (321) et une région supérieure (322).

2. Système de gestion de liquides souterrains (30) selon la revendication 1, dans lequel tous les réservoirs (31, 32, 33) sont formés par des cavités de la mine (M).

3. Système de gestion de liquides souterrains (30) selon la revendication 1 ou 2, dans lequel des étages de nettoyage sont prévus entre ou dans les réservoirs (31, 32, 33).

4. Système de gestion de liquides souterrains (30) selon la revendication 3, dans lequel l'étage de nettoyage comporte au moins un dispositif de filtration (25) destiné à nettoyer le liquide.

5. Système de gestion de liquides souterrains (30) selon la revendication 4, dans lequel le dispositif de filtration (25) est relié au dispositif de pompage (P) fluidiquement de telle manière que le liquide est nettoyé lors d'un processus de pompage du dispositif de pompage (P).

6. Système de gestion de liquides souterrains selon la revendication 4 ou 5, dans lequel le réservoir est au moins partiellement rempli d'une matière poreuse qui forme le dispositif de filtration.

7. Système de gestion de liquides souterrains selon la revendication 6, dans lequel le dispositif de filtration comporte en outre :
au moins une couche formant barrière orientée horizontalement et destinée à prolonger le chemin d'infiltration du liquide, la couche formant barrière étant dotée d'au moins un passage destiné au liquide et de la matière poreuse se trouvant au-dessus et au-dessous de la couche formant barrière ; et
un collecteur qui est destiné à collecter du liquide nettoyé et qui s'étend vers le haut dans une direction verticale depuis le fond du réservoir,
le collecteur comportant au-dessous de la couche formant barrière inférieure au moins une ouverture par laquelle le liquide peut s'écouler ou suinter.

8. Système de gestion de liquides souterrains selon la revendication 7, dans lequel le dispositif de pompage est disposé dans le collecteur et une conduite (4) s'étend vers le haut dans une direction verticale en sortant du collecteur pour entrer dans le réservoir, de préférence également en outre en sortant du collecteur lui-même.

9. Système de gestion de liquides souterrains selon la revendication 7 ou 8, dans lequel le collecteur est disposé de telle sorte qu'il est disposé au-dessus d'une ouverture de liaison qui mène à un réservoir sous-jacent, le collecteur entourant l'ouverture de liaison.

10. Système de gestion de liquides souterrains (30) selon l'une des revendications 3 à 9, dans lequel l'étage de nettoyage comporte au moins un dispositif de nettoyage destiné à élever ou abaisser la valeur de pH du liquide.

11. Système de gestion de liquides souterrains (30) selon la revendication 10, dans lequel le dispositif de nettoyage comporte au moins une couche de calcaire à travers laquelle ou le long de laquelle le liquide est acheminé en vue de modifier la valeur de pH.

12. Système de gestion de liquides souterrains (30) selon l'une des revendications précédentes, dans lequel les conduites (4) s'étendent vers le haut dans une direction verticale en sortant du réservoir (31, 32, 33) pour entrer dans un réservoir sus-jacent (32, 33) ou en sortant de la mine (M).

13. Système de gestion de liquides souterrains (30) selon l'une des revendications précédentes, dans lequel l'installation géothermique est une source d'énergie primaire, et le système comporte en outre au moins une autre source d'énergie.

14. Système de gestion de liquides souterrains (30) selon la revendication 13, dans lequel l'autre source d'énergie est une installation éolienne, une installation solaire ou une centrale à pompage-turbinage.

15. Système de gestion de liquides souterrains (30) selon l'une des revendications précédentes, dans lequel un réservoir (31, 32, 33) est conformé en réserve de liquide dans lequel du liquide est collecté et prêt à l'emploi.

16. Système de gestion de liquides souterrains (30) selon l'une des revendications précédentes, dans lequel le liquide est de l'eau, de préférence de l'eau souterraine ou de l'eau de surface ou de l'eau acheminée artificiellement dans la mine (M).

17. Système de gestion de liquides souterrains (30) selon l'une des revendications précédentes, dans lequel il est prévu, dans le système de gestion de liquides souterrains (30), des parois de séparation ou des couches de séparation, formées d'argile ou de roche argileuse, contre lesquelles adhèrent ou à travers lesquelles s'écoulent des liquides contaminés afin de nettoyer notamment des liquides contaminés par des substances radioactives.

18. Centrale de distribution d'eau (W) destinée à fournir de l'eau potable ou de l'eau industrielle, ladite centrale hydraulique comportant un système de gestion de liquides souterrains (30) selon la revendication 14 servant de système de gestion d'eau, comportant notamment un système de distribution (S) destiné à fournir de l'eau provenant du système de gestion d'eau.

19. Procédé d'exploitation d'un système de gestion de liquide (30) destiné à des mines (M), ledit procédé comportant l'étape suivante consistant à :
pomper un liquide d'au moins un premier réservoir (31, 32), qui est formé par une cavité de la mine (M), dans au moins un second réservoir (32, 33), dont le fond est disposé au-dessus de celui du premier réservoir (31, 32), au moyen d'au moins une conduite (4) reliant les réservoirs (31, 32, 33) et destinée à acheminer le liquide,
le liquide étant acheminé au moyen d'au moins un dispositif de pompage (P) à travers les conduites (4) du premier réservoir (31, 32) dans le second réservoir (32, 33), et au moins un réservoir (32) s'étendant de telle sorte qu'il s'étend d'une couche non contaminée (N) dans une couche contaminée (K), le procédé comportant les étapes suivantes consistant à :
faire fonctionner le dispositif de pompage (P) au moyen d'une installation géothermique du système de gestion de liquide (30), et
prévoir une barrière artificielle (35) dans le réservoir (32) s'étendant sur les couches, la barrière artificielle (35) s'étendant le long d'un aquiclude séparant la couche contaminée (K) de la couche non contaminée (N), et la barrière artificielle (35) divisant le réservoir (32) s'étendant sur les couches en une région inférieure (321) et une région supérieure (322).

20. Procédé selon la revendication 19, comportant en outre l'étape consistant à :
nettoyer le liquide au moyen d'un dispositif de filtration (25) d'un étage de filtration,
le dispositif de filtration (25) étant relié fluidiquement au dispositif de pompage (P) ou disposé dans un passage (5), reliant fluidiquement les réservoirs (32, 33), de telle sorte que le liquide est nettoyé lors du processus de pompage ou lors de la traversée du passage (5), ou bien
le dispositif de filtration étant formé d'une matière poreuse remplissant au moins partiellement le réservoir, et le liquide étant nettoyé lors de la traversée de la matière poreuse.

21. Procédé selon la revendication 19 ou 20, dans lequel un passage (5) est prévu entre le premier réservoir (31, 32) et le second réservoir (32, 33), le procédé comportant en outre les étapes suivantes consistant à :
laisser le liquide s'écouler du second réservoir (32, 33) dans le premier réservoir (31, 32) en ouvrant sélectivement une soupape d'arrêt (10) prévu dans le passage (5), et
générer de l'énergie en faisant fonctionner un dispositif de génération d'énergie (8) au moyen du liquide s'écoulant par le passage (5), le dispositif de génération d'énergie (8) étant disposé dans le passage (5) en aval de la soupape d'arrêt (10).

22. Procédé selon l'une des revendications 19 à 21, comportant en outre l'étape consistant à :
élever ou abaisser la valeur de pH du liquide, le liquide étant acheminé à travers un dispositif de nettoyage disposé dans ou entre les réservoirs (31, 32, 33) et comportant avantageusement au moins une couche de calcaire.
